# EUROPEAN PATENT APPLICATION

(11) **EP 4 825 726 A1**
(43) Date of publication of application: **21.10.2026**
(21) Application number: 25225997.3
(22) Date of filing: 19.12.2025
(51) Int. Cl.: B64C 11/20, B05B 13/04, B05B 13/00, C25D 5/06, C25D 5/54, B05C 5/02, B05B 12/00, B05B 7/16

(54) **LEADING EDGE PROTECTION SYSTEM AND METHOD FOR COMPOSITE STRUCTURES OF AIR VEHICLES**

(30) Priority: 14.04.2025 US 202519178498
(71) Applicant: The Boeing Company, Arlington, VA 22202 (US)
(72) Inventor: MCMILLAN, Daniel J., Arlington, 22202 (US)
(74) Representative: St Clair Jones, Gregory Arthur Langley

(57) **Abstract**

There is provided a leading edge protection system for a leading edge of a composite structure of an air vehicle. The leading edge protection system includes an automated brush plating system having a metal electrode plating brush, a wear-resistant metallic plating solution, and a direct current power supply. A leading edge surface has exposed carbon filaments that are conductive. The wear-resistant metallic plating solution is applied to the leading edge surface to obtain a wear-resistant metallic coating on the leading edge surface. The leading edge protection system further includes an automated cold spray system having a cold spray gun with a chamber for a conductive metallic sprayable powder, and having a supersonic spray nozzle. The automated cold spray system further includes an electrically heated process gas, and an electrical power supply. The conductive metallic sprayable powder is sprayed directly over the wear-resistant metallic coating, to obtain a conductive metallic coating.

## Description

### FIELD

The present disclosure relates generally to edge protection systems and methods for composite structures, and more particularly, to leading edge protection systems and methods for composite structures of air vehicles, such as composite panels for wings, fuselage, and tail sections of aircraft and other air vehicles.

### BACKGROUND

Composite structures are used in a wide variety of applications. Due to their high strength and low weight structural characteristics, composite structures, such as made of carbon fiber reinforced polymers (CFRP), are increasingly used in aircraft manufacturing to form panels for the wings, fuselage, and tail or empennage of an aircraft and other air vehicles. It is desirable to protect leading edges of CFRP panels used on aircraft flight surfaces against erosion, such as wear or delamination, or other physical changes to the leading edges as a result of exposure to external airstreams and/or particulates.

Known leading edge protection systems and methods exist for composite structures of air vehicles, such as leading edges of composite panels for wings, fuselage, and tail or empennage of an aircraft. For example, one known leading edge protection system and method includes wrapping and bonding strips of titanium foil to, and over, 90-degree leading edges of the CFRP panels. However, such known leading edge protection system and method is manually performed and may be time consuming and costly. Moreover, such strips of titanium foil may be heavy and may require careful handling during processing and shipping. Further, for the 90-degree leading edges, the strips of titanium foil may need to be bent and formed into a desired shape to fit over the 90-degree leading edges. This may require custom tooling to form the strips of titanium foil into the desired shape for installation, and such custom tooling may increase manufacturing costs. Further, placement of the strips of titanium foil is key and such placement must typically be positioned flush to the surface of the CFRP panels, which can be time consuming and labor intensive.

Accordingly, there is a need in the art for an improved leading edge protection system and method for composite structures of air vehicles, such as leading edges of panels, for example, CFRP panels, for wings, fuselage, and tail or empennage of an aircraft and other air vehicles, to protect against erosion, such as wear or delamination, of the leading edges, to provide a leading edge protection system and method with automated processes that are not manual, that are fast, that are inexpensive, that avoid the use of manually applied strips of titanium foil, and that provide advantages over known systems and methods.

### SUMMARY

Example implementations of the present disclosure provide for an improved leading edge protection system and method for composite structures of air vehicles, such as leading edges of carbon fiber reinforced polymer (CFRP) panels for wings, fuselage, and tail or empennage of aircraft. As discussed in the below detailed description, versions of the improved leading edge protection system and method may provide significant advantages over known systems and methods.

In a version of the disclosure, there is provided a leading edge protection system for a leading edge of a composite structure of an air vehicle. The leading edge protection system comprises an automated brush plating system. The automated brush system comprises a wear-resistant metallic plating solution. The automated brush system further comprises a metal electrode plating brush wetted with the wear-resistant metallic plating solution that functions as an anode. The automated brush system further comprises a direct current power supply having a positive terminal attached to the metal electrode plating brush wetted with the wear-resistant metallic plating solution, and having a negative terminal attached to a leading edge surface of the leading edge of the composite structure that functions as a cathode. The leading edge surface has exposed carbon filaments that are conductive. The wear-resistant metallic plating solution is applied to the leading edge surface to obtain a wear-resistant metallic coating on the leading edge surface.

The leading edge protection system further comprises an automated cold spray system. The automated cold spray system comprises a conductive metallic sprayable powder, and a cold spray gun having a chamber for holding the conductive metallic sprayable powder, and having a supersonic spray nozzle for spraying the conductive metallic sprayable powder. The automated cold spray system further comprises an electrically heated process gas, to accelerate the conductive metallic sprayable powder through the supersonic spray nozzle above a predetermined velocity for powder adhesion. The automated cold spray system further comprises an electrical power supply attached to the cold spray gun. The conductive metallic sprayable powder is sprayed with the cold spray gun directly over the wear-resistant metallic coating, to obtain a conductive metallic coating over the wear-resistant metallic coating and over the leading edge surface.

The wear-resistant metallic coating and the conductive metallic coating create a protected leading edge of the composite structure of the air vehicle. The protected leading edge provides erosion protection from one or more erosion conditions.

In another version of the disclosure, there is provided a leading edge protection method for protecting a leading edge of a composite structure of an air vehicle. The leading edge protection method comprises providing a leading edge protection system.

The leading edge protection system comprises an automated brush plating system. The automated brush plating system comprises a wear-resistant metallic plating solution, a metal electrode plating brush wetted with the wear-resistant metallic plating solution that functions as an anode, and a direct current power supply having a positive terminal attached to the metal electrode plating brush wetted with the wear-resistant metallic plating solution, and having a negative terminal attached to a leading edge surface of the leading edge of the composite structure that functions as a cathode. The leading edge surface has exposed carbon filaments that are conductive.

The automated cold spray system comprises a conductive metallic sprayable powder, and a cold spray gun having a chamber for holding the conductive metallic sprayable powder, and having a supersonic spray nozzle for spraying the conductive metallic sprayable powder. The automated cold spray system further comprises an electrically heated process gas, to accelerate the conductive metallic sprayable powder through the supersonic spray nozzle above a predetermined velocity for powder adhesion, and an electrical power supply attached to the cold spray gun.

The leading edge protection method further comprises applying, with the metal electrode plating brush of the automated brush plating system, the wear-resistant metallic plating solution to the leading edge surface of the leading edge of the composite structure, to obtain a wear-resistant metallic coating on the leading edge surface.

The leading edge protection method further comprises spraying, with the cold spray gun of the automated cold spray system, the conductive metallic sprayable powder directly over the wear-resistant metallic coating, to obtain a conductive metallic coating over the wear-resistant metallic coating and over the leading edge surface.

The wear-resistant metallic coating and the conductive metallic coating create a protected leading edge of the composite structure of the air vehicle. The protected leading edge provides erosion protection from one or more erosion conditions.

In another version of the disclosure, there is provided a leading edge protection method for protecting a leading edge of a carbon fiber reinforced polymer panel of an aircraft. The leading edge protection method comprises providing a leading edge protection system.

The leading edge protection system comprises one of, a conductive paint, or a conductive primer. The leading edge protection system further comprises a surface cleaning agent. The leading edge protection system further comprises an automated brush plating system. The automated brush plating system comprises a wear-resistant metallic plating solution, a metal electrode plating brush wetted with the wear-resistant metallic plating solution, and a direct current power supply having a positive terminal and a negative terminal.

The leading edge protection system further comprises an automated cold spray system. The automated cold spray system comprises a conductive metallic sprayable powder. The automated cold spray system further comprises a cold spray gun having a chamber for holding the conductive metallic sprayable powder, and having a supersonic spray nozzle for spraying the conductive metallic sprayable powder. The automated cold spray system further comprises an electrically heated process gas, to accelerate the conductive metallic sprayable powder through the supersonic spray nozzle above a predetermined velocity for powder adhesion. The automated cold spray system further comprises an electrical power supply attached to the cold spray gun.

The leading edge protection method further comprises abrading a leading edge surface of the leading edge of the carbon fiber reinforced polymer panel that is machined. The leading edge surface has exposed carbon filaments that are conductive. The leading edge protection method further comprises cleaning, with the surface cleaning agent, the leading edge surface.

The leading edge protection method further comprises applying one of, the conductive paint, or the conductive primer, to the leading edge surface, to obtain a treated leading edge surface. The leading edge protection method further comprises attaching the positive terminal of the direct current power supply to the metal electrode plating brush wetted with the wear-resistant metallic plating solution that functions as an anode.

The leading edge protection method further comprises attaching the negative terminal of the direct current power supply to the treated leading edge surface of the carbon fiber reinforced polymer panel that functions as a cathode. The leading edge protection method further comprises applying, with the metal electrode plating brush of the automated brush plating system, the wear-resistant metallic plating solution to the treated leading edge surface of the carbon fiber reinforced polymer panel, to obtain a wear-resistant metallic coating on the treated leading edge surface.

The leading edge protection method further comprises cleaning, with the surface cleaning agent, the wear-resistant metallic coating on the treated leading edge surface. The leading edge protection method further comprises spraying, with the cold spray gun of the automated cold spray system, the conductive metallic sprayable powder directly over the wear-resistant metallic coating, to obtain a conductive metallic coating over the wear-resistant metallic coating and over the treated leading edge surface.

The wear-resistant metallic coating and the conductive metallic coating create a protected leading edge of the carbon fiber reinforced polymer panel of the aircraft. The protected leading edge provides erosion protection from one or more erosion conditions.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or claims.
FIG. 1 is an illustration of a block diagram of exemplary versions of a leading edge protection system of the disclosure for an air vehicle;
FIG. 2A is an illustration of a flow diagram of an exemplary version of a leading edge protection method of the disclosure;
FIG. 2B is an illustration of a flow diagram of another exemplary version of a leading edge protection method of the disclosure;
FIG. 3A is an illustration of a side sectional view of an exemplary composite panel with a version of a protected leading edge obtained using exemplary versions of a leading edge protection system and a leading edge protection method of the disclosure;
FIG. 3B is an illustration of a side sectional view of an exemplary composite panel with another version of a protected leading edge obtained using exemplary versions of a leading edge protection system and a leading edge protection method of the disclosure;
FIG. 4 is an illustration of an exemplary automated brush plating system used in an exemplary automated brush plating process for versions of a leading edge protection system and a leading edge protection method of the disclosure;
FIG. 5 is an illustration of an exemplary robotic automated brush plating system used in an exemplary robotic automated brush plating process for versions of a leading edge protection system and a leading edge protection method of the disclosure;
FIG. 6 is an illustration of a right side partial cut-away perspective view of an exemplary cold spray gun used in an exemplary automated cold spray system and an exemplary automated cold spray process for versions of a leading edge protection system and a leading edge protection method of the disclosure;
FIG. 7 is an illustration of a left side perspective view of an exemplary robotic automated cold spray system used in an exemplary robotic automated cold spray process for versions of a leading edge protection system and a leading edge protection method of the disclosure;
FIG. 8A is an illustration of a left side perspective view of a composite wing panel of a wing skin having a leading edge, and two exemplary robotic automated cold spray systems in a version of a leading edge protection system and a leading edge protection method of the disclosure;
FIG. 8B is an illustration of an enlarged left side perspective view of the leading edge of the composite wing panel and a cold spray gun attached as an end effector of a robotic automated cold spray system, of FIG. 8A;
FIG. 8C is an illustration of an enlarged right side perspective view of the leading edge of the composite wing panel and a cold spray gun attached as the end effector of another robotic automated cold spray system, of FIG. 8A;
FIG. 8D is an illustration of a front perspective view of the leading edge of the composite wing panel and the two exemplary robotic automated cold spray systems, of FIG. 8A;
FIG. 9A is an illustration of a front right side perspective view of a composite fuselage panel of a fuselage barrel for an aircraft having a leading edge, and an exemplary robotic automated cold spray system in a version of a leading edge protection system and a leading edge protection method of the disclosure;
FIG. 9B is an illustration of a back right side perspective view of the leading edge of the composite fuselage panel and the robotic automated cold spray system, of FIG. 9A;
FIG. 10 is an illustration of a perspective view of an aircraft that incorporates composite panels with leading edge protection obtained by exemplary versions of a leading edge protection system and a leading edge protection method of the disclosure;
FIG. 11 is an illustration of a flow diagram of an exemplary aircraft manufacturing and service method; and
FIG. 12 is an illustration of an exemplary block diagram of an aircraft.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version". The instances of the phrases "one version" or "a version" do not necessarily refer to the same version. Particular features, structures, or characteristics may be combined in any suitable manner consistent with this disclosure. All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, the terms "first", "second", etc., are used as labels for nouns that they precede, and do not imply any type of ordering (e.g., spatial, temporal, logical, etc.).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

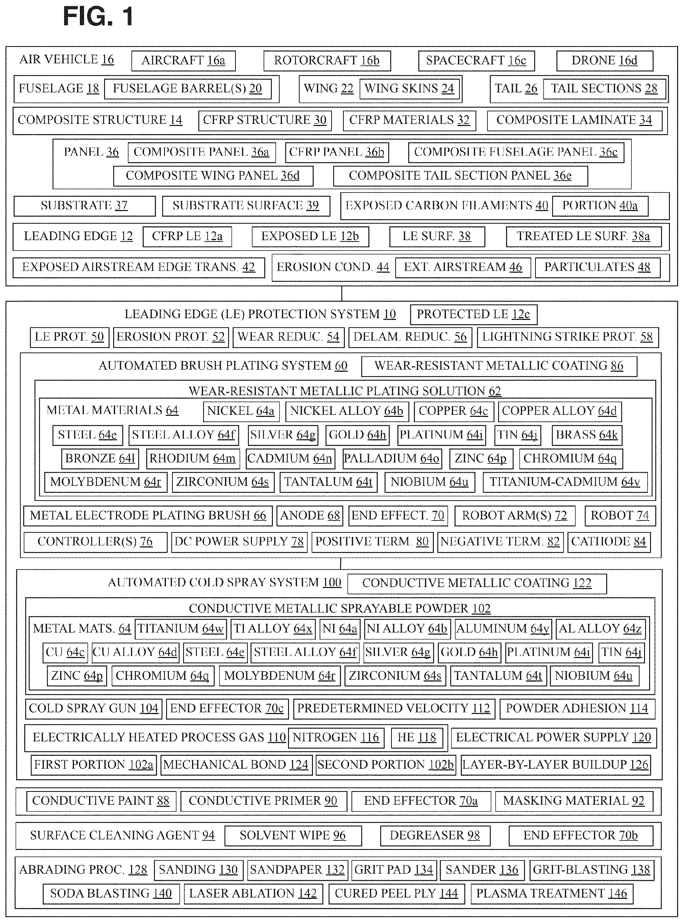

Now referring to FIG. 1, FIG. 1 is an illustration of a block diagram of exemplary versions of a leading edge (LE) protection system 10 of the disclosure. The blocks in FIG. 1 represent elements, and lines connecting the various blocks do not imply any particular dependency of the elements. Furthermore, the connecting lines shown in the various Figures contained herein are intended to represent example functional relationships and/or physical couplings between the various elements, but it is noted that other alternative or additional functional relationships or physical connections may be present in versions disclosed herein. One or more of these blocks may be combined, divided, or combined and divided into different blocks when implemented in an illustrative example. Further, the illustrations of the leading edge protection system 10 in FIG. 1 is not meant to imply physical or architectural limitations to the manner in which an illustrative example may be implemented. Other components in addition to, or in place of, the ones illustrated may be used. Some components may be unnecessary.

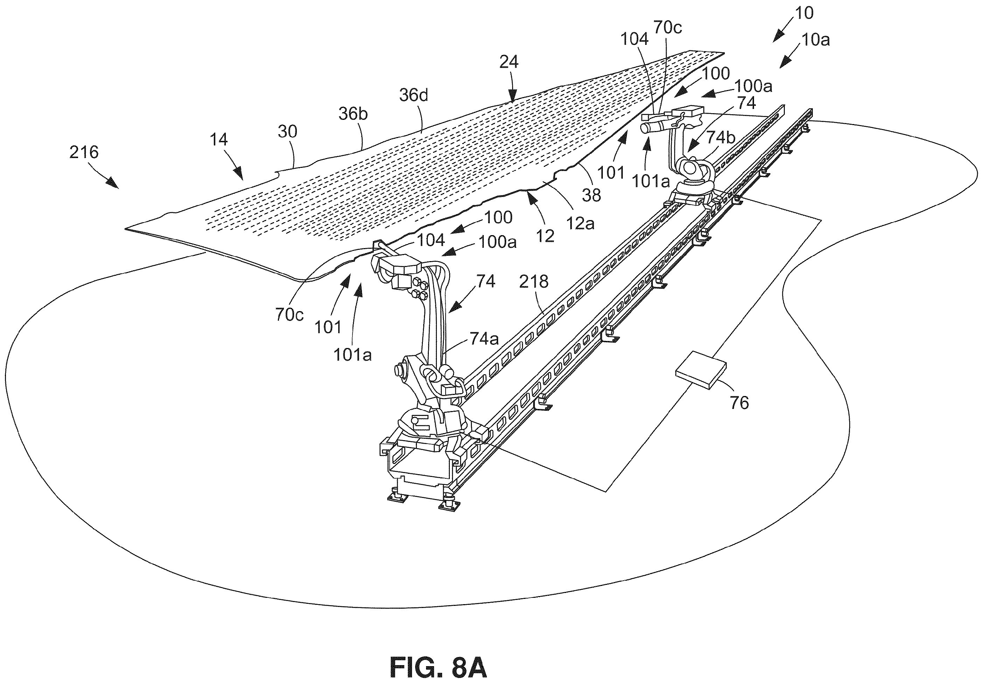

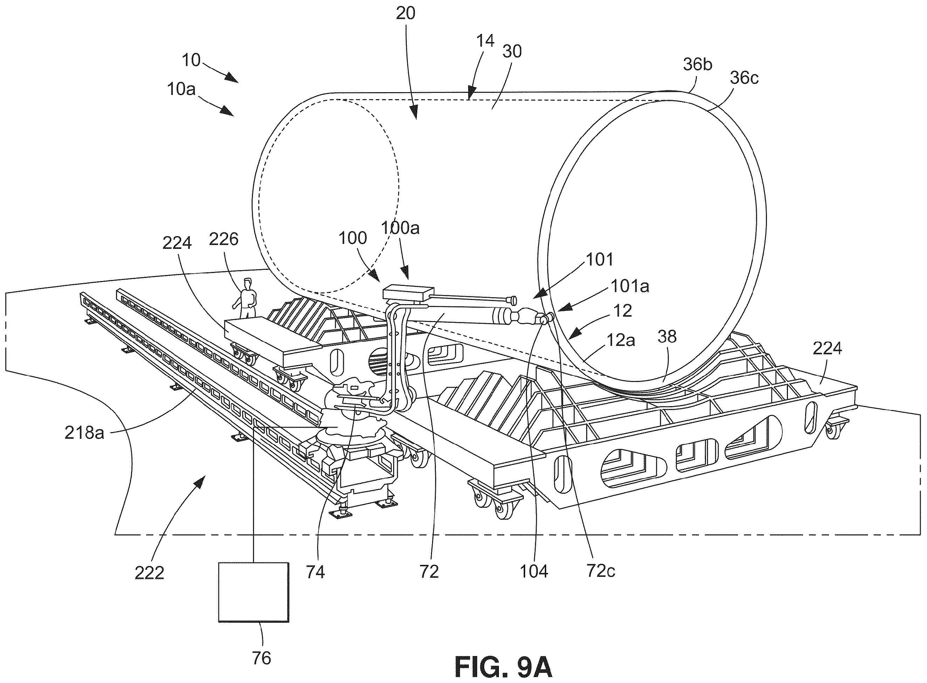

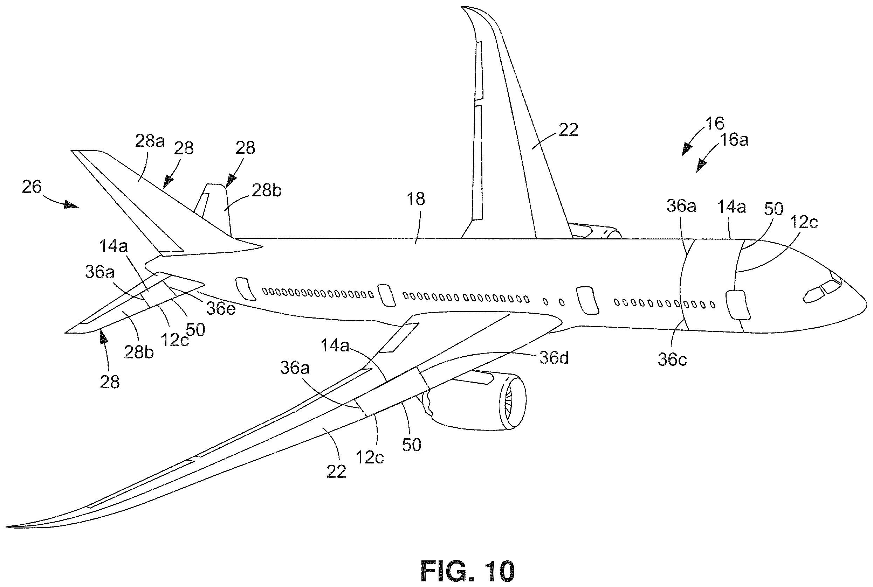

As shown in FIG. 1, in one version, the leading edge protection system 10 is for a leading edge 12 of a composite structure 14 of an air vehicle 16 (see also FIG. 10). As shown in FIG. 1, the air vehicle 16 may comprise an aircraft 16a (see also FIG. 10), a rotorcraft 16b, a spacecraft 16c, a drone 16d, or another suitable air vehicle 16. As shown in FIG. 1, the air vehicle 16, such as the aircraft 16a, comprises a fuselage 18 (see also FIG. 10), or body, with one or more fuselage barrels 20 (see also FIG. 9A). As further shown in FIG. 1, the air vehicle 16, such as the aircraft 16a, comprises wings 22 (see also FIG. 10) each with one or more wing skins 24 (see also FIG. 8A). As further shown in FIG. 1, the air vehicle 16, such as the aircraft 16a, comprises a tail 26 (see also FIG. 10), or empennage, with tail sections 28 (see also FIG. 10), such as a first tail section 28a (see also FIG. 10) in the form of a vertical stabilizer, and second tail sections 28b (see also FIG. 10) in the form of horizontal stabilizers.

As shown in FIG. 1, the composite structure 14 preferably comprises a carbon fiber reinforced polymer (CFRP) structure 30, made of one or more carbon fiber reinforced polymer (CFRP) materials 32. For example, the composite structure 14 may comprise a composite laminate 34. As used herein, "composite laminate" means an assembly of layers of fibrous composite materials, such as carbon fiber reinforced polymer (CFRP) materials, which can be joined to provide required engineering properties, including in-plane stiffness, bending stiffness, strength, and coefficient of thermal expansion, where the individual layers consist of high-modulus, high-strength fibers in a polymeric, metallic, or ceramic matrix material. Typical fibers used include cellulose, graphite, glass, boron, and silicon carbide, and some matrix materials are epoxies, polyimides, aluminum, titanium, and alumina. The composite laminate 34 may be formed using a known manufacturing process such as including a layup process of laying up the individual layers, heating such as in an autoclave or other heating apparatus, curing, and machining such as with a numerical control (NC) machine or a computer numerical control (CNC) machine. The CNC machine provides for an automated control of machine tools by a computer that allows for programming, modification, and real-time adjustments.

As shown in FIG. 1, in one version, the composite structure 14 comprises a panel 36, such as a composite panel 36a, for example, a carbon fiber reinforced polymer (CFRP) panel 36b. As further shown in FIG. 1, the panel 36, such as the composite panel 36a, preferably comprises a composite fuselage panel 36c of a fuselage barrel 20 section of a fuselage 18 (see also FIG. 10) of an air vehicle 16, a composite wing panel 36d of a wing skin 24 of a wing 22 (see also FIG. 10) of an air vehicle 16, or a composite tail section panel 36e of a tail section 28 of a tail 26 (see also FIG. 10) of an air vehicle 16. The composite fuselage panel 36c may also include landing gear doors, passenger doors, cargo doors, access doors, and other doors or access openings of the fuselage 18 and window surrounds of the fuselage 18. Preferably, the composite structure 14 comprises the carbon fiber reinforced polymer (CFRP) panel 36b of a fuselage barrel 20, a wing skin 24, or a tail section 28, or another suitable CFRP panel 36b of an air vehicle 16, such as an aircraft 16a.

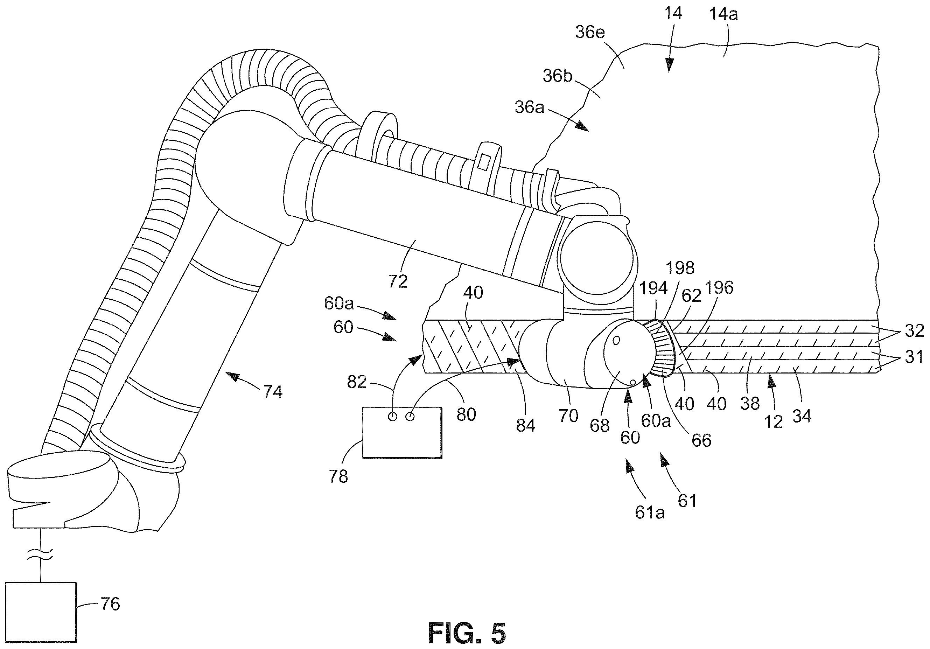

As further shown in FIG. 1, the composite structure 14, such as the panel 36, for example, the composite panel 36a, has the leading edge (LE) 12, such as a carbon fiber reinforced polymer (CFRP) leading edge (LE) 12a, with a leading edge (LE) surface (SURF.) 38 having exposed carbon filaments 40 (see also FIG. 5). The panel 36, such as the composite panel 36a, may comprise a substrate 37 (see FIG. 1). The leading edge surface 38 may comprise a substrate surface 39 (see FIG. 1). The leading edge 12 is an exposed leading edge (LE) 12b (see FIG. 1). The leading edge 12 may include leading edges 12 of composite fuselage panels 36c of fuselage barrel 20 sections, landing gear doors, passenger doors, cargo doors, access doors, and window surrounds, may include leading edges 12 of composite wing panels 36d of wing skins 24 of the wings 22, and may include composite tail section panels 36e of tail sections 28 of the tail 26, such as vertical stabilizers and horizontal stabilizers.

Broadly, the leading edge 12, such as the CFRP leading edge 12a, for example, the exposed leading edge 12b, of the composite structure 14 may comprise an exposed airstream edge transition (TRANS.) 42 (see FIG. 1) between panels 36 of the air vehicle 16, such as the aircraft 16a, that are made of one or more carbon fiber reinforced polymer (CFRP) materials 32. The leading edge 12, such as the CFRP leading edge 12a, for example, the exposed leading edge 12b or the exposed airstream edge transition 42, is exposed to erosion conditions (COND.) 44, such as an external (EXT.) airstream 46 (see FIG. 1) and/or particulates 48 (see FIG. 1), for example, particulates 48 in the external airstream 46, when the air vehicle 16, such as the aircraft 16a, is in flight, such as a normal flight condition and a normal environment.

As shown in FIG. 1, the leading edge protection system 10 provides leading edge (LE) protection (PROT.) 50 and erosion protection (PROT.) 52 for the leading edge 12, such as the CFRP leading edge 12a, for example, the exposed leading edge 12b, of the composite structure 14, such as the panel 36, of the air vehicle 16, such as the aircraft 16a. The erosion protection 52 protects against the erosion conditions 44, such as external airstream 46 and particulates 48, that may result in wear and delamination to the leading edge 12, such as the CFRP leading edge 12a, for example, the exposed leading edge 12b. Thus, the leading edge protection system 10 provides wear reduction (REDUC.) 54 (see FIG. 1) and delamination (DELAM.) reduction (REDUC.) 56 (see FIG. 1) of the leading edge 12, such as the CFRP leading edge 12a, for example, the exposed leading edge 12b. The leading edge protection 50 and the erosion protection 52 for the leading edge 12, such as the CFRP leading edge 12a, for example, the exposed leading edge 12b, of the composite structure 14, is over the life of the air vehicle 16, such as the aircraft 16a. As shown in FIG. 1, the leading edge protection system 10 also provides lightning strike protection (PROT.) 58 to the leading edge 12, such as the CFRP leading edge 12a, for example, the exposed leading edge 12b, of the composite structure 14

As shown in FIG. 1, the leading edge protection system 10 comprises an automated brush plating system 60. As shown in FIG. 1, the automated brush plating system 60 comprises a wear-resistant metallic plating solution 62. As further shown in FIG. 1, the wear-resistant metallic plating solution 62 of the automated brush plating system 60 comprises one or more metal materials 64 comprising one or more of, nickel 64a, nickel alloy 64b, copper 64c, copper alloy 64d, steel 64e, steel alloy 64f, silver 64g, gold 64h, platinum 64i, tin 64j, brass 64k, bronze 641, rhodium 64m, cadmium 64n, palladium 64o, zinc 64p, chromium 64q, molybdenum 64r, zirconium 64s, tantalum 64t, niobium 64u, titanium-cadmium 64v, or another suitable metal material 64. Preferably, the wear-resistant metallic plating solution 62 of the automated brush plating system 60 comprises one or more metal materials 64 comprising one or more of, nickel 64a, and nickel alloy 64b.

As further shown in FIG. 1, the automated brush plating system 60 comprises a metal electrode plating brush 66, or wand, wetted or saturated with the wear-resistant metallic plating solution 62 that functions as an anode 68. That is, the metal electrode plating brush 66, or wand, and the wear-resistant metallic plating solution 62 function as an anode 68. In one version, the metal electrode plating brush 66 has an absorbent material, such as an absorbent cover pad 194 (see FIG. 5) or other suitable pad, wetted or saturated or dipped with the wear-resistant metallic plating solution 62, which is then applied or brushed or deposited over the leading edge surface 38, for example, back and forth over the leading edge surface 38. The absorbent material, such as the absorbent cover pad 194, provides insulation and wear resistance as the metal electrode plating brush 66, or wand moves over the leading edge surface 38 of the leading edge 12.

The metal electrode plating brush 66 may be coupled or attached as an end effector (EFFECT.) 70 (see FIGS. 1, 5) to a robot arm 72 (see FIGS. 1, 5) of a robot 74 (see FIGS. 1, 5). The robot arm 72 and the robot 74 are controlled by one or more controllers 76 (see FIGS. 1, 5).

As further shown in FIG. 1, the automated brush plating system 60 further comprises a direct current (DC) power supply 78 having a positive terminal (TERM.) 80 attached to the metal electrode plating brush 66, or wand, that is wetted or saturated with the wear-resistant metallic plating solution 62. As further shown in FIG. 1, the direct current power supply 78 has a negative terminal (TERM.) 82 attached to the leading edge surface 38 of the leading edge 12 of the composite structure 14 that functions as a cathode 84. The leading edge surface 38 has exposed carbon filaments 40 (see FIGS. 15) that are conductive. The wear-resistant metallic plating solution 62 is applied to the leading edge surface 38 to obtain a wear-resistant metallic coating 86 (see FIG. 1) on the leading edge surface 38.

Preferably, the wear-resistant metallic coating 86 has a thickness in a range of from 0.003 inch (0.0762 millimeter) to 0.015 inch (0.381 millimeter). More preferably, the wear-resistant metallic coating 86 is a nickel alloy 64b wear-resistant metallic coating 86 having a thickness in a range of from 0.003 inch (0.0762 millimeter) to 0.015 inch (0.381 millimeter ).

The leading edge surface 38 of the composite structure 14, such as the panel 36, for example, the CFRP panel 36b, is the cathode 84 and is connected to the negative terminal 82 of the direct current power supply 78. The metal electrode plating brush 66 with the absorbent material, such as the absorbent cover pad 194 (see FIG. 5), or other suitable pad, wetted or saturated with the wear-resistant metallic plating solution 62 is the anode 68. The wear-resistant metallic plating solution 62, which may be fed with a pump, completes the electrical circuit. In one version, the rate of application of the wear-resistant metallic plating solution 62 may be 0.024 inch per hour to 0.047 inch per hour.

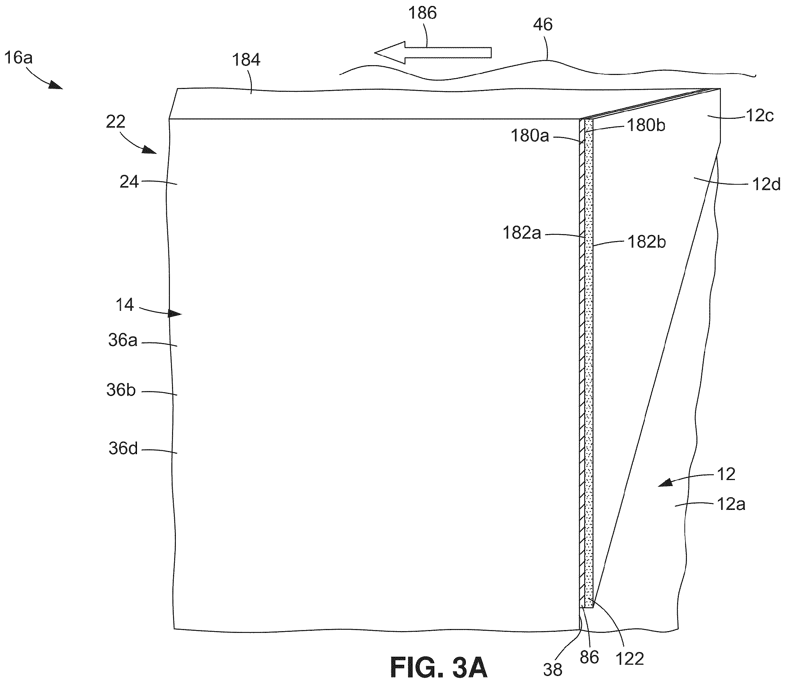

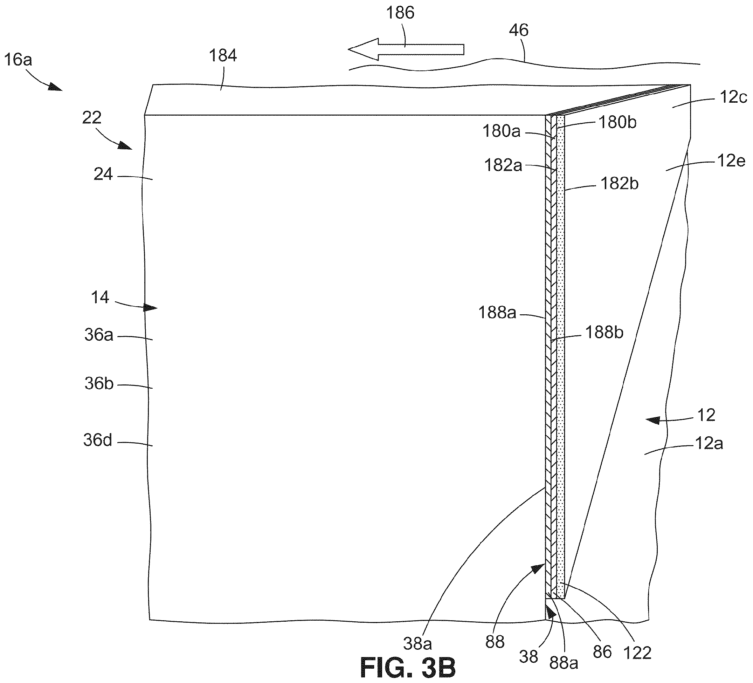

In one version, as shown in FIG. 3A, the wear-resistant metallic plating solution 62 is applied directly to and over the leading edge surface 38, to obtain the wear-resistant metallic coating 86 (see FIG. 1) on the leading edge surface 38. In another version as shown in FIG. 3B, the leading edge protection system 10 may further optionally comprise one of, a conductive paint 88 (see also FIG. 1), or a conductive primer 90 (see also FIG. 1). The conductive paint 88 or the conductive primer 90 may be applied directly to and over the leading edge surface 38 of the composite structure 14 before application of the wear-resistant metallic plating solution 62 with the automated brush plating system 60, to obtain a treated leading edge (LE) surface (SURF.) 38a (see FIG. 1). Once the conductive paint 88, or the conductive primer 90, is applied to the leading edge surface 38 to form the treated leading edge surface 38a, the wear-resistant metallic plating solution 62 is applied directly to and over the treated leading edge surface 38a.

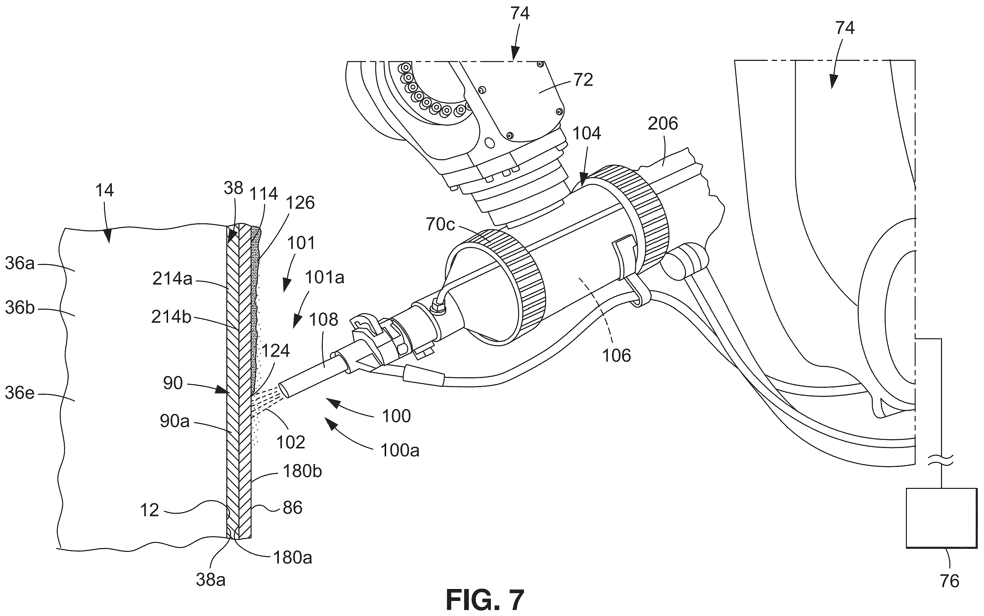

The application of the conductive paint 88 to and over the leading edge surface 38 results in a conductive paint layer 88a (see FIG. 3B) applied to and over the leading edge surface 38. The conductive paint 88 may comprise epoxy paint, acrylic paint, silver-based paint, or another suitable conductive paint 88. The application of the conductive primer 90 to and over the leading edge surface 38 results in a conductive primer layer 90a (see FIG. 7) applied to and over the leading edge surface 38. The conductive primer 90 may comprise epoxy primer, acrylic primer, or another suitable conductive primer 90.

The conductive primer layer 90a may comprise an epoxy-based primer system, including a two-part system or a one-part system. The two-part system may comprise a urethane compatible epoxy primer, or another suitable two-part system. The one-part system may comprise an adhesive bond primer including a heat-curing adhesive bond primer, may comprise a corrosion inhibiting primer including a chromate-based modified epoxy primer, or may comprise another suitable one-part system. The epoxy-based primer system may contain corrosion inhibiting pigments specifically formulated for composites.

The application of the conductive paint 88, or the conductive primer 90, to and over the leading edge surface 38 is preferably automated, and an automated application tool for applying the conductive paint 88, or the conductive primer 90, may be coupled or attached as an end effector 70a (see FIG. 1) to a robot arm 72 (see FIG. 1) of a robot 74 (see FIG. 1). In a high rate production system, preferably the application of the conductive paint 88, or the conductive primer 90, to the leading edge surface 38 is automated and is the end effector 70a attached to the robot arm 72, or is application equipment. The robot arm 72 and the robot 74, or the application equipment, are controlled by one or more controllers 76 (see FIGS. 1, 5). Alternatively, the conductive paint 88, or the conductive primer 90, may be applied manually with a manual application tool, such as a paint brush, a primer brush, or another suitable manual application tool. Automated or manual application of the conductive paint 88, or the conductive primer 90, is dependent on the size and scale of the composite structure 14, such as the composite laminate 34, for example, the composite panel 36a, and ease of reach access.

Preferably, the conductive paint layer 88a has a thickness in a range of from 0.0008 inch (0.02032 millimeter) to 0.0012 inch (0.03048 millimeter).

Preferably, the conductive primer layer 90a has a thickness in a range of from 0.0008 inch (0.02032 millimeter) to 0.0012 inch (0.03048 millimeter).

As shown in FIG. 1, a masking material 92 may be used with the conductive paint 88 or the conductive primer 90 to block the conductive paint 88 or the conductive primer 90 from reaching certain areas. The masking material 92 may comprise an adhesive tape, a liquid masking that is applied as a liquid and peels off after drying, a masking film that is beneficial to large areas to be masked, masking paper to protect adjacent surfaces, or another suitable masking material 92. Once the conductive paint 88 or the conductive primer 90 is applied, the masking material 92 is preferably removed. The application of the masking material 92 may be an automated application or a manual application.

In yet another version, the leading edge protection system 10 may further optionally comprise a surface cleaning agent 94 (see FIG. 1), such as a solvent wipe 96 (see FIG. 1), a degreaser 98 (see FIG. 1), or another suitable surface cleaning agent 94, to clean the leading edge surface 38 of the composite structure 14, such as the panel 36, before application of the conductive paint 88 or the conductive primer 90, or before application of the masking material 92 if it is used, or before application of the wear-resistant metallic plating solution 62 if no conductive paint 88 or conductive primer 90 and/or masking material 92 is used. The leading edge surface 38 of the leading edge 12 may be treated or prepared with one or more surface treatment processes or one or more surface preparation processes, prior to application of the conductive paint 88 or the conductive primer 90, or before application of the wear-resistant metallic plating solution 62 if no conductive paint 88 or conductive primer 90 is used. The one or more surface treatment processes or the one or more surface preparation processes may facilitate adhesion of the conductive paint 88 or the conductive primer 90, or the wear-resistant metallic plating solution 62 if no conductive paint 88 or conductive primer 90 is used, to the leading edge surface 38. A solvent wipe 96 may be used to remove dirt, grime, excess epoxy, or other substances from the leading edge surface 38, or substrate surface 39, to make sure there are no contaminants on the leading edge surface 38 or the substrate surface 39. A degreaser 98 (see FIG. 1) may be used to remove grease from the leading edge surface 38, or substrate surface 39.

The application of the surface cleaning agent 94 to the leading edge surface 38 is preferably automated, and an automated tool for applying the surface cleaning agent 94 may be coupled or attached as an end effector 70b (see FIG. 1) to a robot arm 72 (see FIG. 1) of a robot 74 (see FIG. 1). In one version, the end effector 70b of the surface cleaning agent 94 may be used on a different robot arm 72 as the end effector 70a of the conductive paint 88 or of the conductive primer 90, and may be used on a different robot arm 72 as the end effector 70 of the metal electrode plating brush 66. In another version, the end effector 70b of the surface cleaning agent 94, the end effector 70a of the conductive paint 88 or of the conductive primer 90, and/or the end effector 70 of the metal electrode plating brush 66, may be swapped out and used on a same robot arm 72. Preferably, the end effector 70b for the surface cleaning agent 94, the end effector 70a for the conductive paint 88 or the conductive primer 90, and/or the end effector 70 of the metal electrode plating brush 66 are separate end effectors 70 on a dedicated robot arm 72. In other versions, a reduced degree of freedom application or machine may be used for specific applications with a reduced flexibility, as compared to a robot 74 and a robot arm 72. A 3-axis gantry for wings 22 or a pass through rotary application for fuselage barrels 20 may be implemented.

In a high rate production system, preferably the application of the surface cleaning agent 94 to the leading edge surface 38 is automated and is the end effector 70b attached to the robot arm 72, or is application equipment. The robot arm 72 and the robot 74, or the application equipment, are controlled by one or more controllers 76 (see FIG. 1). Alternatively, the surface cleaning agent 94 may be applied manually with a manual applicator, such as a wipe, for example, a solvent wipe 96, a towel, or another suitable manual applicator. Automated application or manual application of the surface cleaning agent 94 is dependent on the size and scale of the composite structure 14, such as the composite laminate 34, for example, the composite panel 36a, and ease of reach access.

As shown in FIG. 1, the leading edge protection system 10 further comprises an automated cold spray system 100. As shown in FIG. 1, the automated cold spray system 100 comprises a conductive metallic sprayable powder 102. As shown in FIG. 1, the conductive metallic sprayable powder 102 of the automated cold spray system 100 comprises one or more metal materials 64 comprising one or more of, titanium 64w, titanium (TI) alloy 64x, nickel (NI) 64a, nickel (NI) alloy 64b, aluminum 64y, aluminum (AL) alloy 64z, copper (CU) 64c, copper (CU) alloy 64d, steel 64e, steel alloy 64f, silver 64g, gold 64h, platinum 64i, tin 64j, zinc 64p, chromium 64q, molybdenum 64r, zirconium 64s, tantalum 64t, niobium 64u, or another suitable metal material 64. Preferably, the conductive metallic sprayable powder 102 of the automated cold spray system 100 comprises one or more metal materials 64 comprising one or more of, titanium 64w, and titanium (TI) alloy 64x.

As further shown in FIG. 1, in one version, the automated cold spray system 100 comprises a cold spray gun 104 having a chamber 106 for holding the conductive metallic sprayable powder 102, and having a supersonic spray nozzle 108, such as a de Laval spray nozzle, for spraying the conductive metallic sprayable powder 102. The de Laval spray nozzle is a tube which is pinched in the middle, with a rapid convergence and gradual divergence that may be used to accelerate the conductive metallic sprayable powder 102 to supersonic speeds in an axial (thrust) direction, by converting thermal energy of the flow into kinetic energy. The cold spray gun 104 may be coupled or attached as an end effector 70c (see FIG. 1) to a robot arm 72 (see FIG. 1) of a robot 74 (see FIG. 1). The robot arm 72 and the robot 74 are controlled by one or more controllers 76 (see FIG. 1). The metal electrode plating brush 66 of the automated brush plating system 60, and the cold spray gun 104 of the automated cold spray system 100, may be used as end effectors 70, 70c, each coupled to a robot arm 72, such as on one robot 74 or multiple robots 74.

As shown in FIG. 1, the automated cold spray system 100 further comprises an electrically heated process gas 110, to accelerate the conductive metallic sprayable powder 102 through the supersonic spray nozzle 108 above a predetermined velocity 112 for powder adhesion 114 (see also FIG. 7) of the conductive metallic sprayable powder 102. The electrically heated process gas 110 is preferably an electrically heated high-pressure process gas, such as nitrogen 116 (see FIG. 1), helium (HE) 118 (see FIG. 1), or another suitable electrically heated process gas 110.

As shown in FIG. 1, the automated cold spray system 100 further comprises an electrical power supply 120 attached to the cold spray gun 104. The conductive metallic sprayable powder 102 is sprayed with the cold spray gun 104 directly over the wear-resistant metallic coating 86, to obtain a conductive metallic coating 122 coated over the wear-resistant metallic coating 86 and over the leading edge surface 38, or the treated leading edge surface 38a treated with the conductive paint 88 or the conductive primer 90.

Preferably, the conductive metallic coating 122 has a thickness in a range of from 0.0028 inch (0.07112 millimeter) to 0.0032 inch (0.08128 millimeter). However, the conductive metallic coating 122 may have a thickness of greater than 0.0032 inch (0.08128 millimeter) if gaps between panels 36 (see FIG. 1) are known.

In one version, a first portion 102a (see FIG. 1) of the conductive metallic sprayable powder 102 forms a mechanical bond 124 (see FIG. 1) with a portion 40a of the exposed carbon filaments 40 exposed through the wear-resistant metallic coating 86 over the leading edge surface 38 of the leading edge 12. The first portion 102a of the exposed carbon filaments 40 (see FIG. 5) expose through the wear-resistant metallic coating 86, such that the conductive metallic sprayable powder 102 forms the mechanical bond 124 with the exposed carbon filaments 40. The automated brush plating system 60 creates the wear-resistant metallic coating 86, which is a thin protective barrier layer for the conductive metallic sprayable powder 102 initially sprayed from the cold spray gun 104, so some of the conductive metallic sprayable powder 102 particles pierce through the thin protective barrier layer of the wear-resistant metallic coating 86 and bond to the exposed carbon filaments 40 and possibly some epoxy if present, while other conductive metallic sprayable powder 102 particles build up on the wear-resistant metallic coating 86. A second portion 102b of the conductive metallic sprayable powder 102 forms a layer-by-layer buildup 126 over the wear-resistant metallic coating 86. The wear-resistant metallic coating 86 protects the leading edge 12 from the initial impact of the conductive metallic sprayable powder 102.

In one version, the conductive metallic sprayable powder 102 is sprayed directly over the conductive metallic coating 122 with no application of a surface cleaning agent 94. In another version, the conductive metallic coating 122 is cleaned with the surface cleaning agent 94, such as the solvent wipe 96, the degreaser 98, or another suitable surface cleaning agent 94, to clean the conductive metallic coating 122, before application and spraying of the conductive metallic sprayable powder 102 onto the conductive metallic coating 122.

The wear-resistant metallic coating 86 and the conductive metallic coating 122 create a protected leading edge (LE) 12c of the composite structure 14, such as the composite panel 36a, for example, the CFRP panel 36b. The protected leading edge 12c provides erosion protection 52 from one or more erosion conditions 44. When the composite structure 14, such as an aircraft composite structure 14a (see FIG. 10), is exposed to the erosion condition 44, such as the external airstream 46, the leading edge protection system 10 applied over and to the leading edge surface 38 of the leading edge 12 of the air vehicle 16, such as the aircraft 16a, provides delamination reduction 56 (see FIG. 1) of the leading edges 12 of the leading edge surfaces 38 of the composite structure 14, such as the aircraft composite structure 14a, and provides erosion protection 52 (see FIG. 1) of the composite structure 14, such as the aircraft composite structure 14a, from the erosion condition 44, such as the external airstream 46 (see FIGS. 1, 3A-3B) and/or the particulates 48 (see FIG. 1).

Optionally, after the leading edge surface 38 of the leading edge 12 has been machined and before the leading edge surface 38 of the leading edge 12 is either initially coated with the wear-resistant metallic plating solution 62, or initially painted with the conductive paint 88, or primed with the conductive primer 90, or initially cleaned with the surface cleaning agent 94, the leading edge surface 38 of the leading edge 12 may be abraded and undergo an abrading process (PROC.) 128 (see FIG. 1) to smooth out and prepare the leading edge surface 38 for the wear-resistant metallic plating solution 62, for the conductive paint 88 or the conductive primer 90, or for the surface cleaning agent 94. As shown in FIG. 1, the abrading process 128 for abrading the leading edge surface 38 of the leading edge 12 of the composite structure 14, such as the composite laminate 34, for example, the composite panel 36a in the form of the carbon fiber reinforced polymer panel 36b, may comprise one or more of, sanding 130, such as sanding 130 with sandpaper 132, sanding 130 with a grit pad 134, sanding 130 with a sander 136, or another suitable type of sanding 130 with another suitable sanding device. As further shown in FIG. 1, the abrading process 128 may further comprises grit-blasting 138, soda blasting 140, laser ablation 142, cured peel ply 144, plasma treatment 146, or another suitable abrading process 128. In one version, the composite panel 36a, such as the carbon fiber reinforced polymer (CFRP) panel 36b, has a leading edge 12, such as a carbon fiber reinforced polymer (CFRP) leading edge 12a, that is machined and abraded before the application of the wear-resistant metallic plating solution 62, before application of the conductive paint 88 or the conductive primer 90, or before application of the surface cleaning agent 94.

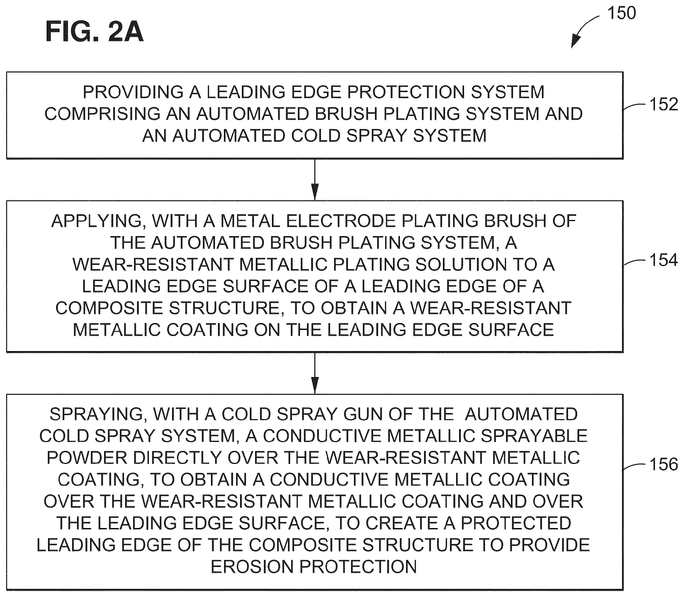

Now referring to FIG. 2A, FIG. 2A is an illustration of a flow diagram of an exemplary version of a leading edge protection method 150 of the disclosure. In another version of the disclosure, there is provided the leading edge protection method 150 for protecting the leading edge 12 (see FIGS. 1, 3A) of a composite structure 14 (see FIGS. 1, 3A), such as a composite panel 36a (see FIG. 1), for example, a carbon fiber reinforced polymer (CFRP) panel 36b (see FIG. 1), of an air vehicle 16 (see FIGS. 1, 10), such as an aircraft 16a (see FIGS. 1, 10). The blocks in FIG. 2A represent operations and/or portions thereof, or elements, and lines connecting the various blocks do not imply any particular order or dependency of the operations or portions thereof, or elements. FIG. 2A and the disclosure of the steps of the leading edge protection method 150 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 2A, the leading edge protection method 150 comprises the step of providing 152 a leading edge protection system 10 (see FIG. 1). As discussed in detail above, the leading edge protection system 10 comprises, in this version of the leading edge protection method 150, the automated brush plating system 60 (see FIGS. 1, 4, 5). The automated brush plating system 60 comprises the wear-resistant metallic plating solution 62 (see FIG. 1).

As shown in FIG. 1, the wear-resistant metallic plating solution 62 of the automated brush plating system 60 comprises one or more metal materials 64 comprising one or more of, nickel 64a, nickel alloy 64b, copper 64c, copper alloy 64d, steel 64e, steel alloy 64f, silver 64g, gold 64h, platinum 64i, tin 64j, brass 64k, bronze 641, rhodium 64m, cadmium 64n, palladium 64o, zinc 64p, chromium 64q, molybdenum 64r, zirconium 64s, tantalum 64t, niobium 64u, titanium-cadmium 64v, or another suitable metal material 64. Preferably, the wear-resistant metallic plating solution 62 of the automated brush plating system 60 comprises one or more metal materials 64 comprising one or more of, nickel 64a, and nickel alloy 64b.

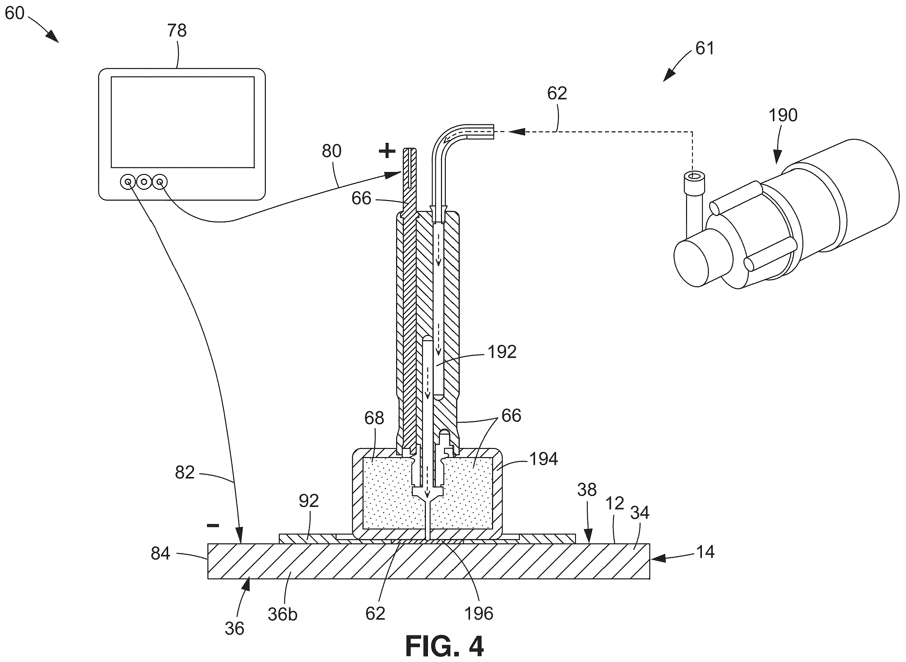

The automated brush plating system 60 further comprises the metal electrode plating brush 66 (see FIGS. 1, 5) wetted or saturated or dipped with the wear-resistant metallic plating solution 62 that functions as an anode 68 (see FIGS. 1, 4). The metal electrode plating brush 66 may have the absorbent cover pad 194 (see FIGS. 4, 5). The automated brush plating system 60 further comprises the direct current (DC) power supply 78 (see FIGS. 1, 4) having a positive terminal 80 (see FIGS. 1, 4) attached to the metal electrode plating brush 66 wetted or saturated or dipped with the wear-resistant metallic plating solution 62, and having a negative terminal 82 (see FIGS. 1, 44) attached to a leading edge surface 38 (see FIGS. 1, 4) of the leading edge 12 of the composite structure 14, such as the composite panel 36a, for example, the CFRP panel 36b, that functions as a cathode 84. The leading edge surface 38 has exposed carbon filaments 40 (see FIGS. 1, 5) that are conductive.

As discussed in detail above, the leading edge protection system 10 further comprises, in this version of the leading edge protection method 150, the automated cold spray system 100 (see FIGS. 1, 7, 8A). The automated cold spray system 100 comprises the conductive metallic sprayable powder 102 (see FIGS. 1, 5).

As shown in FIG. 1, the conductive metallic sprayable powder 102 of the automated cold spray system 100 comprises one or more metal materials 64 comprising one or more of, titanium 64w, titanium alloy 64x, nickel 64a, nickel alloy 64b, aluminum 64y, aluminum alloy 64z, copper 64c, copper alloy 64d, steel 64e, steel alloy 64f, silver 64g, gold 64h, platinum 64i, tin 64j, zinc 64p, chromium 64q, molybdenum 64r, zirconium 64s, tantalum 64t, niobium 64u, or another suitable metal material 64. Preferably, the conductive metallic sprayable powder 102 of the automated cold spray system 100 comprises one or more metal materials 64 comprising one or more of, titanium 64w, and titanium alloy 64x.

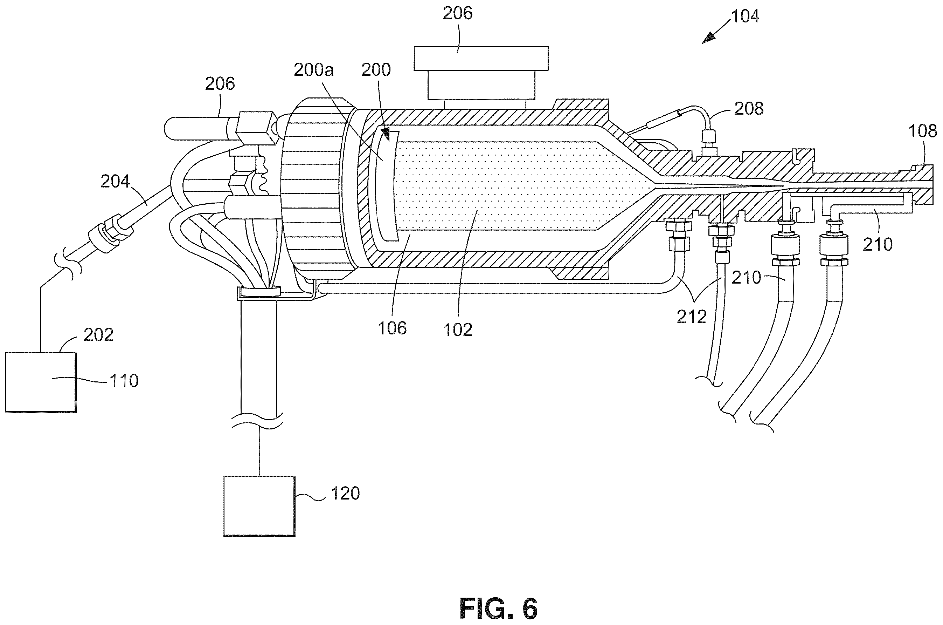

The automated cold spray system 100 further comprises, in one version, the cold spray gun 104 (see FIGS. 1, 6, 7) having the chamber 106 (see FIG. 6) for holding the conductive metallic sprayable powder 102 (see FIGS. 1, 6), and having the supersonic spray nozzle 108 (see FIGS. 1, 6, 7) for spraying the conductive metallic sprayable powder 102. The automated cold spray system 100 further comprises the electrically heated process gas 110 (see FIGS. 1, 6), to accelerate the conductive metallic sprayable powder 102 through the supersonic spray nozzle 108 above a predetermined velocity 112 (see FIG. 1) for powder adhesion 114 (see FIGS. 1, 7). The automated cold spray system 100 further comprises the electrical power supply 120 attached to the cold spray gun 104.

The step of providing 152 the leading edge protection system 10 may further comprise providing the leading edge protection system 10 where the metal electrode plating brush 66 of the automated brush plating system 60, and the cold spray gun 104 of the automated cold spray system 100, are end effectors 70, 70c, respectively, each coupled to a robot arm 72 (see FIGS. 1, 5, 7) of a robot 74 (see FIGS. 1, 5, 7).

As shown in FIG. 2A, the leading edge protection method 150 further comprises the step of applying 154, with the metal electrode plating brush 66 of the automated brush plating system 60, the wear-resistant metallic plating solution 62 to the leading edge surface 38 of the leading edge 12 of the composite structure 14, to obtain the wear-resistant metallic coating 86 (see FIGS. 1, 2A-2B) on the leading edge surface 38 of the leading edge 12.

As shown in FIG. 2A, the leading edge protection method 150 further comprises the step of spraying 156, with the cold spray gun 104 of the automated cold spray system 100, the conductive metallic sprayable powder 102 directly over the wear-resistant metallic coating 86, to obtain a conductive metallic coating 122 over the wear-resistant metallic coating 86 and over the leading edge surface 38 of the leading edge 12.

The wear-resistant metallic coating 86 and the conductive metallic coating 122 create a protected leading edge 12c (see FIGS. 1, 1) of the composite structure 14 of the air vehicle 16, such as the aircraft 16a. The protected leading edge 12c provides erosion protection 52 (see FIG. 1) from one or more erosion conditions 44 (see FIG. 1), such as the external airstream 46 (see FIGS. 1, 3A) and/or the particulates 48 (see FIG. 1). The protected leading edge 12c provides leading edge protection 50 (see FIG. 1), such as erosion protection 52 (see FIG. 1), and provides wear reduction 54 (see FIG. 1) and delamination reduction 56 (see FIG. 1). In addition, the protected leading edge 12c provides lightning strike protection 58 (see FIG. 1) to the leading edge 12 that is protected of the composite structure 14, such as the composite panel 36a, for example, the composite fuselage panel 36c (see FIG. 1), the composite wing panel 36d (see FIG. 1), the composite tail section panel 36e (see FIG. 1), or another suitable composite panel 36a.

The leading edge protection method 150 may further comprise, before the applying 154 the wear-resistant metallic plating solution 62 with the automated brush plating system 60 to the leading edge surface 38 of the leading edge 12 of the composite structure 14, abrading with an abrading process 128 (see FIG. 1) the leading edge surface 38 of the leading edge 12 of the composite structure 14 that is machined. As shown in FIG. 1, abrading process 128 comprises one or more of, sanding 130, such as sanding 130 with sandpaper 132, sanding 130 with a grit pad 134, sanding 130 with a sander 136, or grit-blasting 138, soda blasting 140, laser ablation 142, cured peel ply 144, plasma treatment 146, or another suitable abrading process 128.

The leading edge protection method 150 may further comprise, before the applying 154 the wear-resistant metallic plating solution 62 with the automated brush plating system 60 to the leading edge surface 38 of the leading edge 12 of the composite structure 14, applying one of, the conductive paint 88 (see FIGS. 1, 3B), or the conductive primer 90 (see FIG. 1), to the leading edge surface 38 of the leading edge 12 of the composite structure 14, to obtain the treated leading edge surface 38a (see FIG. 1).

The leading edge protection method 150 may further comprise, applying the surface cleaning agent 94 (see FIG. 1) to clean one or more of, the leading edge surface 38 of the composite structure 14 before the applying of the conductive paint 88, or before the applying of the conductive primer 90; or the leading edge surface 38 of the composite structure 14 before the applying of the wear-resistant metallic plating solution 62; and/or the wear-resistant metallic coating 86 on the leading edge surface 83 of the leading edge 12 before the spraying of the conductive metallic sprayable powder 102.

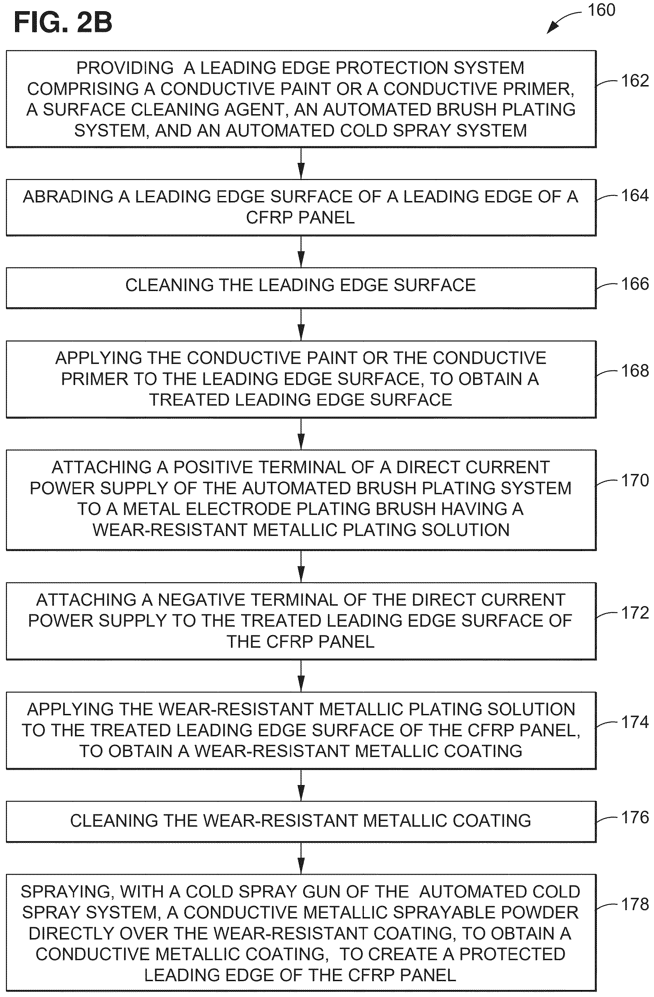

Now referring to FIG. 2B, FIG. 2B is an illustration of a flow diagram of another exemplary version of a leading edge protection method 160 of the disclosure. In another version of the disclosure, there is provided the leading edge protection method 160 for protecting the leading edge 12 (see FIGS. 1, 3B) of a carbon fiber reinforced polymer (CFRP) panel 36b (see FIGS. 1, 3B) of an aircraft 16a (see FIGS. 1, 10). The blocks in FIG. 2B represent operations and/or portions thereof, or elements, and lines connecting the various blocks do not imply any particular order or dependency of the operations or portions thereof, or elements. FIG. 2B and the disclosure of the steps of the leading edge protection method 160 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 2B, the leading edge protection method 160 comprises the step of providing 162 a leading edge protection system 10 (see FIG. 1). In this version, as discussed in detail above, the leading edge protection system 10 comprises one of, a conductive paint 88 (see FIGS. 1, 3B), such as a conductive paint layer 88a (see FIG. 3B), or a conductive primer 90 (see FIGS. 1, 7), such as a conductive primer layer 90a (see FIG. 7), and further comprises a surface cleaning agent 94 (see FIG. 1), such as a solvent wipe 96 (see FIG. 1), a degreaser 98 (see FIG. 1), or another suitable surface cleaning agent 94.

In this version, as discussed in detail above, the leading edge protection system 10 further comprises the automated brush plating system 60 (see FIGS. 1, 4, 5). The automated brush plating system 60 comprises the wear-resistant metallic plating solution 62 (see FIG. 1).

As shown in FIG. 1, the wear-resistant metallic plating solution 62 of the automated brush plating system 60 comprises one or more metal materials 64 comprising one or more of, nickel 64a, nickel alloy 64b, copper 64c, copper alloy 64d, steel 64e, steel alloy 64f, silver 64g, gold 64h, platinum 64i, tin 64j, brass 64k, bronze 641, rhodium 64m, cadmium 64n, palladium 64o, zinc 64p, chromium 64q, molybdenum 64r, zirconium 64s, tantalum 64t, niobium 64u, titanium-cadmium 64v, or another suitable metal material 64. Preferably, the wear-resistant metallic plating solution 62 of the automated brush plating system 60 comprises one or more metal materials 64 comprising one or more of, nickel 64a, and nickel alloy 64b.

The automated brush plating system 60 further comprises the metal electrode plating brush 66 (see FIGS. 1, 5) wetted or saturated or dipped with the wear-resistant metallic plating solution 62 that functions as an anode 68 (see FIGS. 1, 4). The metal electrode plating brush 66 may have the absorbent cover pad 194 (see FIGS. 4, 5). The automated brush plating system 60 further comprises the direct current (DC) power supply 78 (see FIGS. 1, 4) having the positive terminal 80 (see FIGS. 1, 4) attached to the metal electrode plating brush 66 wetted or saturated or dipped with the wear-resistant metallic plating solution 62, and having the negative terminal 82 (see FIGS. 1, 4) attached to a leading edge surface 38 (see FIGS. 1, 4) of the leading edge 12 of the composite structure 14, such as the composite panel 36a, for example, the CFRP panel 36b, that functions as a cathode 84. The leading edge surface 38 has exposed carbon filaments 40 (see FIGS. 1, 5) that are conductive.

As discussed in detail above, the leading edge protection system 10 further comprises the automated cold spray system 100 (see FIGS. 1, 7, 8A). The automated cold spray system 100 comprises the conductive metallic sprayable powder 102 (see FIGS. 1,5).

As shown in FIG. 1, the conductive metallic sprayable powder 102 of the automated cold spray system 100 comprises one or more metal materials 64 comprising one or more of, titanium 64w, titanium alloy 64x, nickel 64a, nickel alloy 64b, aluminum 64y, aluminum alloy 64z, copper 64c, copper alloy 64d, steel 64e, steel alloy 64f, silver 64g, gold 64h, platinum 64i, tin 64j, zinc 64p, chromium 64q, molybdenum 64r, zirconium 64s, tantalum 64t, niobium 64u, or another suitable metal material 64. Preferably, the conductive metallic sprayable powder 102 of the automated cold spray system 100 comprises one or more metal materials 64 comprising one or more of, titanium 64w, and titanium alloy 64x.

The step of providing 162 the leading edge protection system 10 may further comprise, providing the leading edge protection system 10, where the wear-resistant metallic plating solution 62 comprises one or more metal materials 64 comprising one or more of, nickel 64a, and nickel alloy 64b, and the conductive metallic sprayable powder 102 comprises one or more metal materials 64 comprising one or more of, titanium 64w, and titanium alloy 64x.

The automated cold spray system 100 further comprises, in one version, the cold spray gun 104 (see FIGS. 1, 6, 7) having the chamber 106 (see FIG. 6) for holding the conductive metallic sprayable powder 102 (see FIGS. 1, 6), and having the supersonic spray nozzle 108 (see FIGS. 1, 6, 7) for spraying the conductive metallic sprayable powder 102. The automated cold spray system 100 further comprises the electrically heated process gas 110 (see FIGS. 1, 6), to accelerate the conductive metallic sprayable powder 102 through the supersonic spray nozzle 108 above a predetermined velocity 112 (see FIG. 1) for powder adhesion 114 (see FIGS. 1, 7). The automated cold spray system 100 further comprises the electrical power supply 120 attached to the cold spray gun 104.

The step of providing 162 the leading edge protection system 10 may further comprise providing the leading edge protection system 10 where the metal electrode plating brush 66 of the automated brush plating system 60, and the cold spray gun 104 of the automated cold spray system 100, are end effectors 70, 70c, respectively, each coupled to the robot arm 72 (see FIGS. 5,7) of the robot 74 (see FIG. 5, 7).

As shown in FIG. 2B, the leading edge protection method 160 further comprises the step of abrading 164, with an abrading process 128 (see FIG. 1), the leading edge surface 38 of the leading edge 12 of the carbon fiber reinforced polymer (CFRP) panel 36b that is machined. As shown in FIG. 1, abrading with the abrading process 128 the leading edge surface 38 of the leading edge 12 of the carbon fiber reinforced polymer (CFRP) panel 36b further comprises, abrading with the abrading process 128 comprising one or more of, sanding 130 with sandpaper 132, sanding 130 with a grit pad 134, sanding 130 with a sander 136, grit-blasting 138, soda blasting 140, laser ablation 142, cured peel ply 144, plasma treatment 146, or another suitable abrading process 128. The leading edge surface 38 of the leading edge 12 has exposed carbon filaments 40 (see FIGS. 1, 5) that are conductive.

As shown in FIG. 2B, the leading edge protection method 160 further comprises the step of cleaning 166, with the surface cleaning agent 94, the leading edge surface 38 of the leading edge 12. The surface cleaning agent 94 (see FIG. 1) may comprise a solvent wipe 96 (see FIG. 1), a degreaser 98 (see FIG. 1), or another suitable surface cleaning agent 94, to clean the leading edge surface 38 of the leading edge 12 of the carbon fiber reinforced polymer (CFRP) panel 36b. The solvent wipe 96 may be used to remove dirt, grime, excess epoxy, or other substances from the leading edge surface 38, or substrate surface 39 (see FIG. 1), to make sure there are no contaminants on the leading edge surface 38, or the substrate surface 39. The degreaser 98 may be used to remove grease from the leading edge surface 38, or substrate surface 39.

As shown in FIG. 2B, the leading edge protection method 160 further comprises the step of applying 168 one of, the conductive paint 88 (see FIGS. 1, 3B), or the conductive primer 90 (see FIG. 1), to the leading edge surface 38 of the leading edge 12 of the carbon fiber reinforced polymer (CFRP) panel 36b, to obtain the treated leading edge surface 38a (see FIG. 1). For example, the surface cleaning agent 94 facilitates adhesion to the leading edge surface 38 by the conductive paint 88 or by the conductive primer 90.

As shown in FIG. 2B, the leading edge protection method 160 further comprises the step of attaching 170 the positive terminal 80 (see FIGS. 1, 4) of the direct current power supply 78 (see FIGS. 1, 4) to the metal electrode plating brush 66 (see FIGS. 1, 4) wetted with the wear-resistant metallic plating solution 62 (see FIGS. 1, 4) that functions as an anode 68 (see FIGS. 1, 4). As shown in FIG. 2B, the leading edge protection method 160 further comprises the step of attaching 172 the negative terminal 82 (see FIGS. 1, 4 of the direct current power supply 78 to the treated leading edge surface 38a of the carbon fiber reinforced polymer panel 36b that functions as a cathode 84 (see FIGS. 1, 4).

As shown in FIG. 2B, the leading edge protection method 160 further comprises the step of applying 174, with the metal electrode plating brush 66 of the automated brush plating system 60, the wear-resistant metallic plating solution 62 to the treated leading edge surface 38a of the carbon fiber reinforced polymer (CFRP) panel 36b, to obtain the wear-resistant metallic coating 86 (see FIGS. 1, 3B) on the treated leading edge surface 38a.

As shown in FIG. 2B, the leading edge protection method 160 further comprises the step of cleaning 176, with the surface cleaning agent 94, the wear-resistant metallic coating 86 on the treated leading edge surface 38a. The surface cleaning agent 94 (see FIG. 1) may comprise the solvent wipe 96 (see FIG. 1), the degreaser 98 (see FIG. 1), or another suitable surface cleaning agent 94, to clean the wear-resistant metallic coating 86 coated over the conductive paint 88, or coated over the conductive primer 90.

As shown in FIG. 2B, the leading edge protection method 160 further comprises the step of spraying 178, with the cold spray gun 104 of the automated cold spray system 100, the conductive metallic sprayable powder 102 directly over the wear-resistant metallic coating 86, to obtain the conductive metallic coating 122 (see FIGS. 1,3B) over the wear-resistant metallic coating 86 and over the treated leading edge surface 38a.

The wear-resistant metallic coating 86 and the conductive metallic coating 122 create a protected leading edge 12c (see FIG. 1) of the carbon fiber reinforced polymer panel 36b of the aircraft 16a. The protected leading edge 12c provides erosion protection 52 (see FIG. 1) from one or more erosion conditions 44 (see FIG. 1), such as the external airstream 46 (see FIGS. 1, 3B) and/or the particulates 48 (see FIG. 1). The protected leading edge 12c provides leading edge protection 50 (see FIG. 1), such as erosion protection 52 (see FIG. 1), and provides wear reduction 54 (see FIG. 1) and delamination reduction 56 (see FIG. 1). In addition, the protected leading edge 12c provides lightning strike protection 58 to the leading edge 12 that is protected of the carbon fiber reinforced polymer panel 36b of the aircraft 16a.

Now referring to FIG. 3A, FIG. 3A is an illustration of a side sectional view of an exemplary composite structure 14, such as a composite panel 36a, for example, a carbon fiber reinforced polymer (CFRP) panel 36b, in the form of a composite wing panel 36d, of a wing skin 24 of an aircraft 16a (see FIG. 10), having a version of a protected leading edge 12c obtained using exemplary versions of a leading edge protection system 10 (see FIG. 1) and a leading edge protection method 150 (see FIG. 2A) of the disclosure. As shown in FIG. 3A, the protected leading edge 12c formed by the leading edge protection system 10 and the leading edge protection method 150 comprises a wear-resistant metallic coating 86, or layer, applied to and over the leading edge surface 38 of the leading edge 12, such as the carbon fiber reinforced polymer (CFRP) leading edge 12a, of the composite structure 14, such as the composite panel 36a, for example, the CFRP panel 36b, in the form of the composite wing panel 36d. As shown in FIG. 3A, the protected leading edge 12c formed by the leading edge protection system 10 and the leading edge protection method 150 further comprises a conductive metallic coating 122, or layer, applied, via spraying, to and over the surface of the wear-resistant metallic coating 86. As shown in FIG. 3A, the protected leading edge 12c comprises a 2-layer protected leading edge 12d.

As shown in FIG. 3A, the wear-resistant metallic coating 86, or layer, has a first side 180a, or inner side, and a second side 180b, or outer side, and the conductive metallic coating 122, or layer, has a first side 182a, or inner side, and a second side 182b, or outer side. As shown in FIG. 3A, in this version, the first side 180a, or inner side, of the wear-resistant metallic coating 86, or layer, is adjacent to, and coupled to, and coated over the leading edge surface 38 of the composite structure 14, such as the composite panel 36a, for example, the CFRP panel 36b, in the form of the composite wing panel 36d. As further shown in FIG. 3A, the first side 182a of the conductive metallic coating 122, or layer, is adjacent to, and coupled to, and deposited or coated over the second side 180b of the wear-resistant metallic coating 86.

FIG. 3A further shows an aero surface 184 of the composite structure 14, such as the composite panel 36a, for example, the CFRP panel 36b, in the form of the composite wing panel 36d. FIG. 3A further shows an external airstream direction 186 of the external airstream 46 that flows across the protected leading edge 12c and across the aero surface 184.

Now referring to FIG. 3B, FIG. 3B is an illustration of a side sectional view of an exemplary composite structure 14, such as a composite panel 36a, for example, a carbon fiber reinforced polymer (CFRP) panel 36b, in the form of a composite wing panel 36d, of a wing skin 24 of an aircraft 16a (see FIG. 10), having another version of a protected leading edge 12c obtained using exemplary versions of a leading edge protection system 10 (see FIG. 1) and a leading edge protection method 160 (see FIG. 2B) of the disclosure.

As shown in FIG. 3B, the protected leading edge 12c formed by the leading edge protection system 10 and the leading edge protection method 160 comprises a conductive paint layer 88a of conductive paint 88 applied to and over the leading edge surface 38 of the leading edge 12, such as the carbon fiber reinforced polymer (CFRP) leading edge 12a, of the composite structure 14, such as the composite panel 36a, for example, the CFRP panel 36b, in the form of the composite wing panel 36d, to obtain the treated leading edge surface 38a. As shown in FIG. 3B, the protected leading edge 12c formed by the leading edge protection system 10 and the leading edge protection method 160 further comprises the wear-resistant metallic coating 86, or layer, applied to and over the conductive paint layer 88a over the leading edge surface 38 of the leading edge 12, such as the carbon fiber reinforced polymer (CFRP) leading edge 12a, of the composite structure 14, such as the composite panel 36a, for example, the CFRP panel 36b, in the form of the composite wing panel 36d. As shown in FIG. 3B, the protected leading edge 12c formed by the leading edge protection system 10 and the leading edge protection method 150 further comprises the conductive metallic coating 122, or layer, applied, via spraying using the automated cold spray system 100 to and over the surface of the wear-resistant metallic coating 86. As shown in FIG. 3B, the protected leading edge 12c comprises a 3-layer protected leading edge 12e.

As shown in FIG. 3B, the conductive paint layer 88a has a first side 188a, or inner side, and a second side 188b, or outer side. As further shown in FIG. 3B, the wear-resistant metallic coating 86, or layer, has the first side 180a, or inner side, and the second side 180b, or outer side, and the conductive metallic coating 122, or layer, has the first side 182a, or inner side, and the second side 182b, or outer side.

As shown in FIG. 3B, in this version, the first side 188a, or inner side, of the conductive paint layer 88a is adjacent to, and coupled to, and coated over the leading edge surface 38 of the composite structure 14, such as the composite panel 36a, for example, the CFRP panel 36b, in the form of the composite wing panel 36d. As further shown in FIG. 3B, in this version, the first side 180a, or inner side, of the wear-resistant metallic coating 86, or layer, is adjacent to, and coupled to, and coated over the second side 188b of the conductive paint layer 88a. As further shown in FIG. 3B, the first side 182a of the conductive metallic coating 122, or layer, is adjacent to, and coupled to, and deposited or coated over the second side 180b of the wear-resistant metallic coating 86.

FIG. 3B further shows the aero surface 184 of the composite structure 14, such as the composite panel 36a, for example, the CFRP panel 36b, in the form of the composite wing panel 36d. FIG. 3B further shows then external airstream direction 186 of the external airstream 46 that flows across the protected leading edge 12c and across the aero surface 184.

Now referring to FIG. 4, FIG. 4 is an illustration of an exemplary automated brush plating system 60 used in an exemplary automated brush plating process 61 for versions of a leading edge protection system 10 (see FIG. 1) and a leading edge protection method 150 (see FIG. 2A) and a leading edge protection method 160 (see FIG. 2B) of the disclosure.

As shown in FIG. 4, in this version, the automated brush plating system 60 comprises a wear-resistant metallic plating solution 62 that may be stored in a plating solution container 190 and flows out of the plating solution container 190, through one or more plating solution tubes 192 that may be within the metal electrode plating brush 66, or wand, to deposit the wear-resistant metallic plating solution 62 on the leading edge surface 38 of the leading edge 12 of the composite structure 14, such as a composite laminate 34, for example, a panel 36 in the form of a carbon fiber reinforced polymer (CFRP) panel 36b.

As shown in FIG. 1, and discussed above, the wear-resistant metallic plating solution 62 of the automated brush plating system 60 comprises one or more metal materials 64 comprising one or more of, nickel 64a, nickel alloy 64b, copper 64c, copper alloy 64d, steel 64e, steel alloy 64f, silver 64g, gold 64h, platinum 64i, tin 64j, brass 64k, bronze 641, rhodium 64m, cadmium 64n, palladium 64o, zinc 64p, chromium 64q, molybdenum 64r, zirconium 64s, tantalum 64t, niobium 64u, titanium-cadmium 64v, or another suitable metal material 64. Preferably, the wear-resistant metallic plating solution 62 of the automated brush plating system 60 comprises one or more metal materials 64 comprising one or more of, nickel 64a, and nickel alloy 64b.

As further shown in FIG. 4, the automated brush plating system 60 comprises the metal electrode plating brush 66, or wand, wetted or saturated with the wear-resistant metallic plating solution 62 that functions as the anode 68. As shown in FIG. 4, the metal electrode plating brush 66 may have an absorbent cover pad 194, wetted or saturated or dipped with the wear-resistant metallic plating solution 62, which is then applied or brushed or deposited over the leading edge surface 38, for example, back and forth over the leading edge surface 38 of the leading edge 12. The absorbent cover pad 194 provides insulation and wear resistance as the metal electrode plating brush 66, or wand, moves over the leading edge surface 38 of the leading edge 12.

As shown in FIG. 4, the automated brush plating system 60 further comprises the direct current (DC) power supply 78 having the positive terminal (+) 80 attached to the metal electrode plating brush 66, or wand, that is wetted or saturated with the wear-resistant metallic plating solution 62. As further shown in FIG. 4, the direct current power supply 78 has the negative terminal (-) 82 attached to the leading edge surface 38 of the leading edge 12 of the composite structure 14 that functions as the cathode 84. The leading edge surface 38 has exposed carbon filaments 40 (see FIG. 1) that are conductive. The wear-resistant metallic plating solution 62 is applied to the leading edge surface 38 to obtain a wear-resistant metallic coating 86 (see FIG. 1) on the leading edge surface 38.

As shown in FIG. 4, in this version, the automated brush plating system 60 further comprises a masking material 92 applied to the leading edge surface 38 of the leading edge 12 on each side of a plating deposit 196 of the wear-resistant metallic plating solution 62, which will form the wear-resistant metallic coating 86 (see FIG. 2A) on and over the leading edge surface 38 of the leading edge 12.

In one version, as shown in FIG. 3A, the wear-resistant metallic plating solution 62 is applied directly to and over the leading edge surface 38 to obtain the wear-resistant metallic coating 86 (see FIG. 1) on the leading edge surface 38. In another version as shown in FIG. 3B, the leading edge protection system 10 may further optionally comprise one of, a conductive paint 88 (see also FIG. 1), or a conductive primer 90 (see also FIG. 1). The conductive paint 88, or the conductive primer 90, may be applied directly to and over the leading edge surface 38 of the composite structure 14 before application of the wear-resistant metallic plating solution 62 with the automated brush plating system 60, to obtain a treated leading edge surface 38a (see FIG. 1). Once the conductive paint 88, or the conductive primer 90, is applied to the leading edge surface 38 to form the treated leading edge surface 38a, the wear-resistant metallic plating solution 62 is applied directly to and over the treated leading edge surface 38a.

Now referring to FIG. 5, FIG. 5 is an illustration of another version of an exemplary automated brush plating system 60, such as a robotic automated brush plating system 60a used in an exemplary automated brush plating process 61, such as a robotic automated brush plating process 61a, for versions of a leading edge protection system 10 (see FIG. 1) and a leading edge protection method 150 (see FIG. 2A) or a leading edge protection method 160 (see FIG. 2B) of the disclosure.

As shown in FIG. 5, in this version, the robotic automated brush plating system 60a comprises a wear-resistant metallic plating solution 62 that flows out of a metal electrode plating brush 66 having brush bristles 198 to deposit the wear-resistant metallic plating solution 62 on the leading edge surface 38 of the leading edge 12 of the composite structure 14, such as an aircraft composite structure 14a, for example, a composite laminate 34 in the form of a composite panel 36a, such as a carbon fiber reinforced polymer (CFRP) panel 36b. As shown in FIG. 5, the composite laminate 34 has stacked layers 31 of composite carbon fiber reinforced polymer (CFRP) materials 32.

As shown in FIG. 1, and discussed above, the wear-resistant metallic plating solution 62 of the automated brush plating system 60 comprises one or more metal materials 64 comprising one or more of, nickel 64a, nickel alloy 64b, copper 64c, copper alloy 64d, steel 64e, steel alloy 64f, silver 64g, gold 64h, platinum 64i, tin 64j, brass 64k, bronze 641, rhodium 64m, cadmium 64n, palladium 64o, zinc 64p, chromium 64q, molybdenum 64r, zirconium 64s, tantalum 64t, niobium 64u, titanium-cadmium 64v, or another suitable metal material 64. Preferably, the wear-resistant metallic plating solution 62 of the automated brush plating system 60 comprises one or more metal materials 64 comprising one or more of, nickel 64a, and nickel alloy 64b.

As further shown in FIG. 5, the robotic automated brush plating system 60a comprises the metal electrode plating brush 66 with the brush bristles 198 wetted or saturated with the wear-resistant metallic plating solution 62 that functions as the anode 68. As shown in FIG. 5, the metal electrode plating brush 66 has an absorbent cover pad 194, wetted or saturated or dipped with the wear-resistant metallic plating solution 62, which is then applied or brushed or deposited as the plating deposit 196 over the leading edge surface 38, for example, back and forth over the leading edge surface 38 of the leading edge 12.

As shown in FIG. 5, the robotic automated brush plating system 60a further comprises the direct current (DC) power supply 78 having the positive terminal 80 attached to the metal electrode plating brush 66 that is wetted or saturated with the wear-resistant metallic plating solution 62. As further shown in FIG. 5, the direct current power supply 78 has the negative terminal 82 attached to the leading edge surface 38 of the leading edge 12 of the composite structure 14 that functions as the cathode 84. The leading edge surface 38 has exposed carbon filaments 40 (see FIG. 5) that are conductive. The wear-resistant metallic plating solution 62 is applied to the leading edge surface 38 to obtain the wear-resistant metallic coating 86 (see FIG. 1) on the leading edge surface 38.

As shown in FIG. 5, in this version, the metal electrode plating brush 66 is attached as an end effector 70 to a robot arm 72 of a robot 74. As shown in FIG. 5, the robot arm 72 and the robot 74 are controlled by a controller 76 coupled to the robot 74.

Now referring to FIG. 6, FIG. 6 is an illustration of a right side partial cut-away perspective view of an exemplary cold spray gun 104 used in an exemplary automated cold spray system 100 (see FIGS. 1, 7) and an exemplary automated cold spray process 101 (see FIG. 7) for versions of the leading edge protection system 10 (see FIG. 1) and the leading edge protection method 150 (see FIG. 2A) and the leading edge protection method 160 (see FIG. 2B) of the disclosure. As shown in FIG. 6, the cold spray gun 104 has a chamber 106 for holding the conductive metallic sprayable powder 102. As shown in FIG. 6, the chamber 106 has a heating element 200, such as an electrical heating element 200a, that heats the electrically heated process gas 110 that flows from a process gas container 202, through a process gas tubing 204, and into the chamber 106 where the electrically heated process gas 110 is heated by the heating element 200, such as the electrical heating element 200a.

As shown in FIG. 6, the cold spray gun 104 has a supersonic spray nozzle 108, such as a de Laval spray nozzle, for spraying the conductive metallic sprayable powder 102. The electrically heated process gas 110, such as nitrogen 116 (see FIG. 1), helium 118 (see FIG. 1), or another suitable electrically heated process gas 110, is used to accelerate the conductive metallic sprayable powder 102 through the supersonic spray nozzle 108 above a predetermined velocity 112 (see FIG. 1) for powder adhesion 114 (see FIGS. 1, 7) of the conductive metallic sprayable powder 102.

As shown in FIG. 6, an electrical power supply 120 is attached to the cold spray gun 104. As shown in FIG. 6, in this version, the cold spray gun 104 may also have a pressure sensor 206, a temperature sensor 208, a nozzle cooling system 210, injection tubing 212, and other suitable components or parts.

The cold spray gun 104 is used to spray the conductive metallic sprayable powder 102 directly over the wear-resistant metallic coating 86 (see FIGS. 2A-2B), to obtain the conductive metallic coating 122 (see FIGS. 2A-2B) coated over the wear-resistant metallic coating 86. As shown in FIG. 1, the conductive metallic sprayable powder 102 of the automated cold spray system 100 comprises one or more metal materials 64 comprising one or more of, titanium 64w, titanium alloy 64x, nickel 64a, nickel alloy 64b, aluminum 64y, aluminum alloy 64z, copper 64c, copper alloy 64d, steel 64e, steel alloy 64f, silver 64g, gold 64h, platinum 64i, tin 64j, zinc 64p, chromium 64q, molybdenum 64r, zirconium 64s, tantalum 64t, niobium 64u, or another suitable metal material 64. Preferably, the conductive metallic sprayable powder 102 of the automated cold spray system 100 comprises one or more metal materials 64 comprising one or more of, titanium 64w, and titanium alloy 64x.

Now referring to FIG. 7, FIG. 7 is an illustration of a left side perspective view of an exemplary automated cold spray system 100 (see also FIG. 1), such as a robotic automated cold spray system 100a, used in an exemplary automated cold spray process 101, such as a robotic automated cold spray process 101a, for versions of the leading edge protection system 10 (see FIG. 1) and the leading edge protection method 160 (see FIG. 2B) of the disclosure.

In this version, as shown in FIG. 7, the cold spray gun 104 is attached as an end effector 70c to a robot arm 72 of a robot 74. The robot arm 72 and the robot 74 are controlled by a controller 76. The cold spray gun 104 also includes the chamber 106 (see FIG. 7), the electrical power supply 120 (see FIG. 6) attached to the cold spray gun 104, the pressure sensor 206 (see FIG. 7), the temperature sensor 208 (see FIG. 6), the nozzle cooling system 210 (see FIG. 6), the injection tubing 212 (see FIG. 6), and other suitable components or parts.

As shown in FIG. 7, the cold spray gun 104 sprays out the conductive metallic sprayable powder 102 from the supersonic spray nozzle 108. The electrically heated process gas 110 (see FIG. 6), such as nitrogen 116 (see FIG. 1), helium 118 (see FIG. 1), or another suitable electrically heated process gas 110, accelerates the conductive metallic sprayable powder 102 through the supersonic spray nozzle 108 above the predetermined velocity 112 (see FIG. 1) for powder adhesion 114 (see FIGS. 1, 7) of the conductive metallic sprayable powder 102 onto and over the second side 180b of the wear-resistant metallic coating 86.

FIG. 7 further shows a composite structure 14, such as a composite panel 36a, for example, a carbon fiber reinforced polymer (CFRP) panel 36b, in the form of a composite tail section panel 36e, for a tail section 28 (see FIG. 10) of an aircraft 16a (see FIG. 10). FIG. 7 shows the composite panel 36a having the leading edge 12 with the leading edge surface 38 that is coated or covered with a conductive primer layer 90a of conductive primer 90. The conductive primer layer 90a has a first side 214a, or inner side, and a second side 214b, or outer side. The first side 214a of the conductive primer layer 90a is applied to and over the leading edge surface 38 of the leading edge 12, of the composite structure 14, such as the composite panel 36a, for example, the CFRP panel 36b, in the form of the composite tail section panel 36e, to obtain the treated leading edge surface 38a. As further shown in FIG. 7, the first side 180a, or inner side, of the wear-resistant metallic coating 86, is adjacent to, and coupled to, and coated over the leading edge surface 38 of the composite structure 14, such as the composite panel 36a, for example, the CFRP panel 36b, in the form of the composite tail section panel 36e. As further shown in FIG. 7, the conductive metallic sprayable powder 102 is deposited and coated over the second side 180b of the wear-resistant metallic coating 86 to form the conductive metallic coating 122 (see FIG. 3B).

The automated cold spray process 101, such as the robotic automated cold spray process 101a accelerates the conductive metallic sprayable powder 102 at supersonic speeds by the electrically heated process gas 110 (see FIG. 6) through the supersonic spray nozzle 108, to produce a mechanical bond 124 (see FIG. 7) such as a mixed mechanical bond, between the conductive metallic sprayable powder 102 and the coated leading edge surface 38 including the conductive primer layer 90a, or the conductive paint layer 88a (see FIG. 3B), and the wear-resistant metallic coating 86. In one version, with the 2-layer protected leading edge 12d (see FIG. 3A), where there is no conductive paint layer 88a or no conductive primer layer 90a, the mechanical bond 124 may be between the conductive metallic sprayable powder 102, which forms the conductive metallic coating 122, and the wear-resistant metallic coating 86. In another version, with the 3-layer protected leading edge 12e (see FIG. 3B), where there is a conductive paint layer 88a or a conductive primer layer 90a, the mechanical bond 124 may be a mixed mechanical bond between the conductive metallic sprayable powder 102 which forms the conductive metallic coating 122 and the coated leading edge surface 38 including the conductive paint layer 88a or the conductive primer layer 90a and the wear-resistant metallic coating 86. In yet another version, with the 2-layer protected leading edge 12d, where there is no conductive paint layer 88a or no conductive primer layer 90a, the mechanical bond 124 is between the conductive metallic sprayable powder 102 which forms the conductive metallic coating 122 and the exposed carbon filaments 40 of the leading edge surface 38 coated with the wear-resistant metallic coating 86. In yet another version, with the 3-layer protected leading edge 12e, where there is a conductive paint layer 88a, or a conductive primer layer 90a, the mechanical bond 124 is a mixed mechanical bond between the conductive metallic sprayable powder 102, which forms the conductive metallic coating 122, and the exposed carbon filaments 40 exposed through the conductive paint layer 88a, or the conductive primer layer 90a, and the wear-resistant metallic coating 86. In one or more versions, the conductive paint layer 88a, or the conductive primer layer 90a, and the wear-resistant metallic coating 86 may be partially mixed during the automated cold spray process 101 and the mechanical bond 124 becomes a mixed mechanical bond or mixed adhesion of all of the stack of layers of material, e.g., the conductive paint layer 88a, or the conductive primer layer 90a, and the wear-resistant metallic coating 86, and the conductive metallic sprayable powder 102. The conductive metallic sprayable powder 102 is deposited by the cold spray gun 104 via a layer-by-layer buildup 126 (see FIG. 7).

Now referring to FIGS. 8A-8D, FIGS. 8A-8D show a composite structure 14, such as a carbon fiber reinforced polymer (CFRP) structure 30, for example, a carbon fiber reinforced polymer (CFRP) panel 36b in the form of a composite wing panel 36d of a wing skin 24 for an air vehicle 16 (see FIG. 10), such as an aircraft 16a (see FIG. 10) in an automated wing panel leading edge protection processing arrangement 216. FIGS. 8A-8D further show the composite wing panel 36d undergoing the automated cold spray process 101, such as the robotic automated cold spray process 101a, with the automated cold spray system 100, such as the robotic automated cold spray system 100a, using a version of the leading edge protection system 10, such as an automated leading edge protection system 10a, and a leading edge protection method 150 (see FIG. 2A) of the disclosure. A leading edge protection method 160 (see FIG. 2B) may also be used. As shown in FIGS. 8A-8D, the composite wing panel 36d has a leading edge 12, such as a carbon fiber reinforced polymer (CFRP) leading edge 12a, with a leading edge surface 38.

FIG. 8A is an illustration of a left side perspective view of the composite structure 14, such as the CFRP structure 30, for example, the CFRP panel 36b in the form of the composite wing panel 36d having the leading edge 12, such as the CFRP leading edge 12a, with the leading edge surface 38, and two exemplary robotic automated cold spray systems 100a. FIG. 8A shows two robots 74, such as a first robot 74a and a second robot 74b, each coupled to a track apparatus 218 that allows the robots 74 to move along the track apparatus 218 and move to various positions along the leading edge 12, so that the cold spray gun 104 attached as an end effector 70c can be aligned with the leading edge 12 to be sprayed or coated with the conductive metallic sprayable powder 102 (see FIG. 7). FIG. 8A further shows the two robots 74, such as the first robot 74a and the second robot 74b coupled, or attached, to a controller 76 for controlling the robots 74.

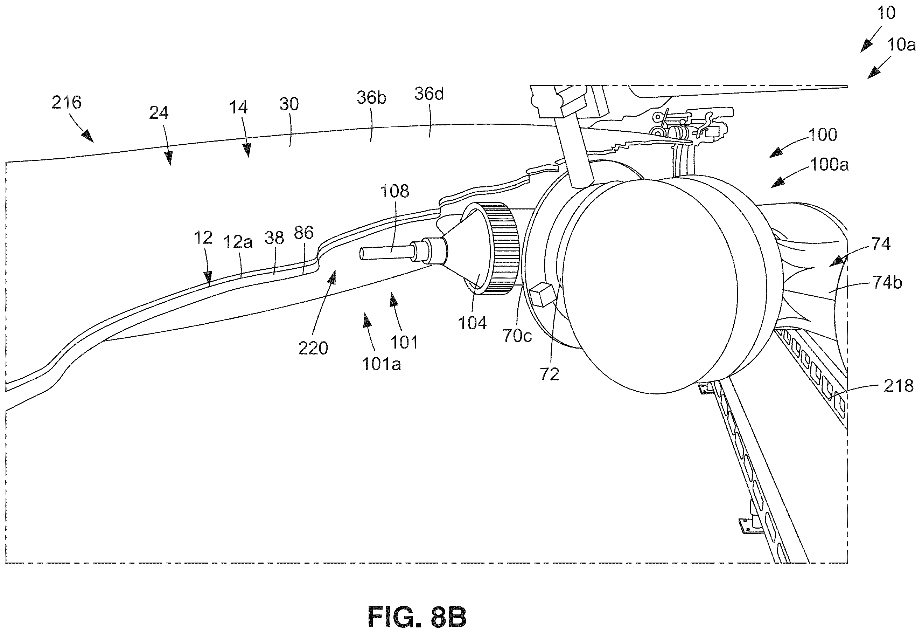

FIG. 8B is an illustration of an enlarged left side perspective view of the leading edge 12, such as the CFRP leading edge 12a, with the leading edge surface 38, of the composite structure 14, such as the CFRP structure 30, for example, the CFRP panel 36b in the form of the composite wing panel 36d and the cold spray gun 104 attached as an end effector 70c to a robot arm 72 of a robot 74, such as the second robot 74b, of the automated cold spray system 100, such as the robotic automated cold spray system 100a, of FIG. 8A. FIG. 8B shows the supersonic spray nozzle 108 of the cold spray gun 104 aligned in an alignment position 220 with the leading edge 12, such as the CFRP leading edge 12a, with the leading edge surface 38 that has been coated with the wear-resistant metallic coating 86. The cold spray gun 104 is in the alignment position 220 ready to perform the automated cold spray process 101, such as the robotic automated cold spray process 101a, with the automated cold spray system 100, such as the robotic automated cold spray system 100a, using a version of the leading edge protection system 10, such as an automated leading edge protection system 10a, and a leading edge protection method 150 (see FIG. 2A) of the disclosure. FIG. 8B further shows the track apparatus 218 supporting the robot 74, such as the second robot 74b.

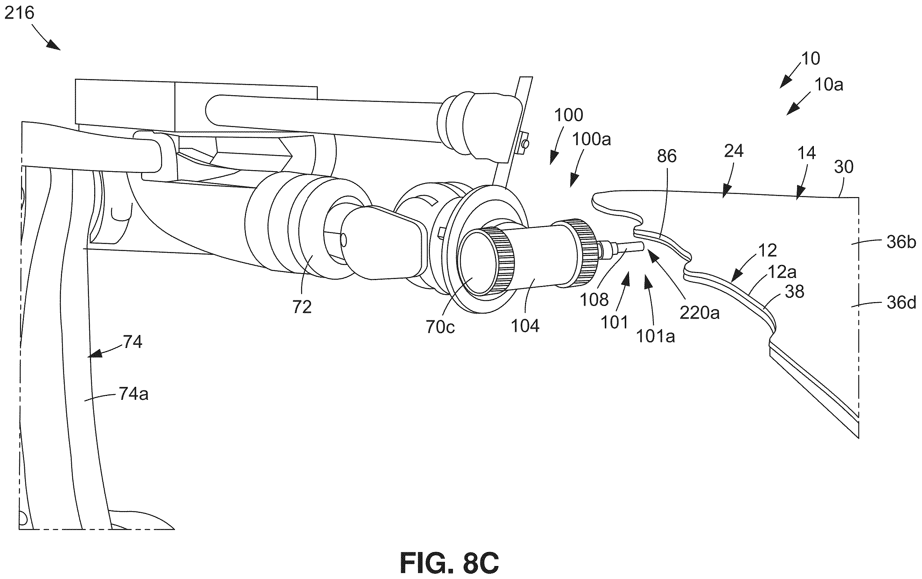

FIG. 8C is an illustration of an enlarged right side perspective view of the leading edge 12, such as the CFRP leading edge 12a, with the leading edge surface 38, of the composite structure 14, such as the CFRP structure 30, for example, the CFRP panel 36b in the form of the composite wing panel 36d and the cold spray gun 104 attached as an end effector 70c to a robot arm 72 of a robot 74, such as the first robot 74a, of the automated cold spray system 100, such as the robotic automated cold spray system 100a, of FIG. 8A. FIG. 8C shows the supersonic spray nozzle 108 of the cold spray gun 104 aligned in an alignment position 220a with the leading edge 12, such as the CFRP leading edge 12a, with the leading edge surface 38 that has been coated with the wear-resistant metallic coating 86. The cold spray gun 104 is in the alignment position 220a ready to perform the automated cold spray process 101, such as the robotic automated cold spray process 101a, with the automated cold spray system 100, such as the robotic automated cold spray system 100a, using a version of the leading edge protection system 10, such as an automated leading edge protection system 10a, and a leading edge protection method 150 (see FIG. 2A) of the disclosure.

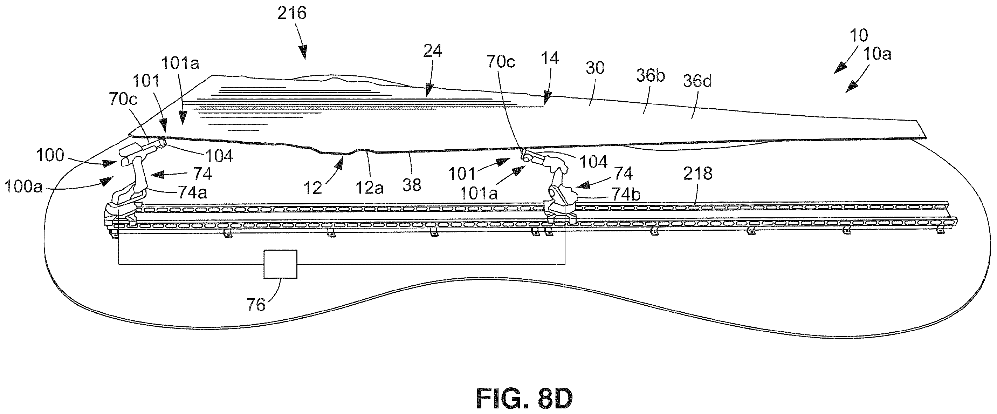

FIG. 8D is an illustration of a front perspective view of the leading edge 12, such as the CFRP leading edge 12a, with the leading edge surface 38, of the composite structure 14, such as the CFRP structure 30, for example, the CFRP panel 36b in the form of the composite wing panel 36d and the two exemplary automated cold spray systems 100, such as the two robotic automated cold spray systems 100a, of FIG. 8A. FIG. 8D shows the two robots 74, such as the first robot 74a and the second robot 74b, each coupled to the track apparatus 218 that allows the robots 74 to move along the track apparatus 218 and move to various positions along the leading edge 12, so that the cold spray gun 104 attached as an end effector 70c can be aligned with the leading edge 12 to be sprayed or coated with the conductive metallic sprayable powder 102 (see FIG. 7). FIG. 8D further shows the two robots 74, such as the first robot 74a and the second robot 74b coupled, or attached, to the controller 76 for controlling the robots 74, to perform the automated cold spray process 101, such as the robotic automated cold spray process 101a.

Now referring to FIGS. 9A-9B, FIGS. 9A-9B show a composite structure 14, such as a carbon fiber reinforced polymer (CFRP) structure 30, for example, a carbon fiber reinforced polymer (CFRP) panel 36b in the form of a composite fuselage panel 36c of a fuselage barrel 20 for an air vehicle 16 (see FIG. 10), such as an aircraft 16a (see FIG. 10) in an automated fuselage panel leading edge protection processing arrangement 222. FIGS. 9A-9B further show the composite fuselage panel 36c undergoing the automated cold spray process 101, such as the robotic automated cold spray process 101a, with the automated cold spray system 100, such as the robotic automated cold spray system 100a, using a version of the leading edge protection system 10, such as an automated leading edge protection system 10a, and a leading edge protection method 150 (see FIG. 2A) of the disclosure. A leading edge protection method 160 (see FIG. 2B) may also be used. As shown in FIGS. 9A-9B, the composite fuselage panel 36c has a leading edge 12, such as a carbon fiber reinforced polymer (CFRP) leading edge 12a, with a leading edge surface 38.

FIG. 9A is an illustration of a front right side perspective view of the composite structure 14, such as the CFRP structure 30, for example, the CFRP panel 36b in the form of the composite fuselage panel 36c having the leading edge 12, such as the CFRP leading edge 12a, with the leading edge surface 38, and an exemplary automated cold spray system 100, such as an exemplary robotic automated cold spray system 100a. FIG. 9A shows a robot 74 coupled to a track apparatus 218a that allows the robot 74 to move along the track apparatus 218a and move to various positions along the leading edge 12, so that the cold spray gun 104 attached as an end effector 70c can be aligned with the leading edge 12 to be sprayed or coated with the conductive metallic sprayable powder 102 (see FIG. 7). FIG. 9A further shows the robot 74 coupled, or attached, to a controller 76 for controlling the robot 74. FIG. 9A further shows the fuselage barrel 20 supported by support carts 224. FIG. 9A further shows an operator 226 to operate and/or oversee the automated fuselage panel leading edge protection processing arrangement 222.

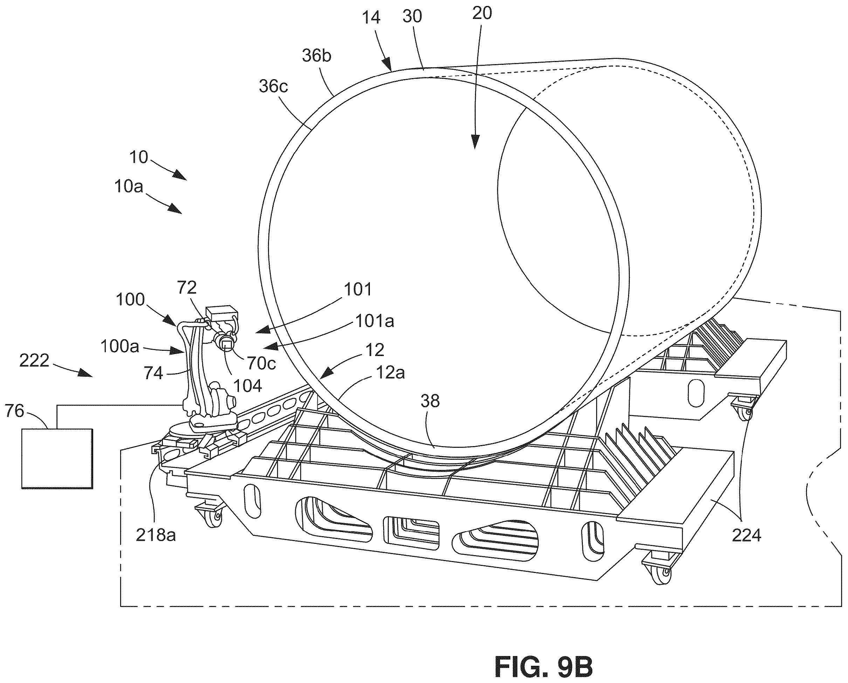

FIG. 9B is an illustration of a back right side perspective view of the leading edge 12, such as the CFRP leading edge 12a, with the leading edge surface 38, of the composite structure 14, such as the CFRP structure 30, for example, the CFRP panel 36b in the form of the composite fuselage panel 36c, and the automated cold spray system 100, such as the robotic automated cold spray system 100a, of FIG. 9A. FIG. 9B shows the robot 74 coupled to the track apparatus 218a that allows the robot 74 to move along the track apparatus 218a and move to various positions along the leading edge 12, so that the cold spray gun 104 attached as an end effector 70c can be aligned with the leading edge 12 to be sprayed or coated with the conductive metallic sprayable powder 102 (see FIG. 7). FIG. 9B further shows the robot 74 coupled, or attached, to the controller 76 for controlling the robot 74. FIG. 9B further shows the fuselage barrel 20 supported by the support carts 224.

Now referring to FIG. 10, FIG. 10 is an illustration of a perspective view of an air vehicle 16, such as an aircraft 16a, that incorporates composite panels 36a, such as one or more composite fuselage panels 36c, one or more composite wing panels 36d, and one or more composite tail section panels 36e, each having a protected leading edge 12c with leading edge protection 50 (see FIG. 1) obtained by exemplary versions of the leading edge protection system 10 (see FIG. 1), and the leading edge protection method 150 (see FIG. 2A), or the leading edge protection method 160 (see FIG. 2B) of the disclosure. As shown in FIG. 10, the aircraft 16a comprises a fuselage 18, wings 22, and a tail 26. As shown in FIG. 10, the tail 26 comprises tail sections 28, such as a first tail section 28a, for example, a vertical stabilizer, and second tail sections 28b, for example, horizontal stabilizers. FIG. 10 shows a composite panel 36a, such as a composite fuselage panel 36c, with a protected leading edge 12c on the fuselage 18 of the air vehicle 16, such as the aircraft 16a. FIG. 10 further shows a composite panel 36a, such as a composite wing panel 36d, with a protected leading edge 12c on the wing 22 of the air vehicle 16, such as the aircraft 16a. FIG. 10 further shows a composite panel 36a, such as a composite tail section panel 36e, with a protected leading edge 12c on the tail section 28, such as the second tail section 28b, of the air vehicle 16, such as the aircraft 16a.

Although the air vehicle 16, such as the aircraft 16a, shown in FIG. 10 is generally representative of a commercial passenger aircraft having one or more composite panels 36a, the teachings of the disclosed versions of the leading edge protection system 10 (see FIG. 1), and the leading edge protection method 150 (see FIG. 2A), and the leading edge protection method 160 (see FIG. 2B) of the disclosure may be applied to other passenger aircraft.

Moreover, the teachings of the disclosed versions of the leading edge protection system 10 (see FIG. 1), and the leading edge protection method 150 (see FIG. 2A), and the leading edge protection method 160 (see FIG. 2B) of the disclosure may be applied to composite panels 36a with leading edge protection 50 (see FIG. 1) for cargo aircraft, military aircraft, rotorcraft 16b (see FIG. 1), spacecraft 16c (see FIG. 1), drones 16d (see FIG. 1), and other types of air vehicles 16.

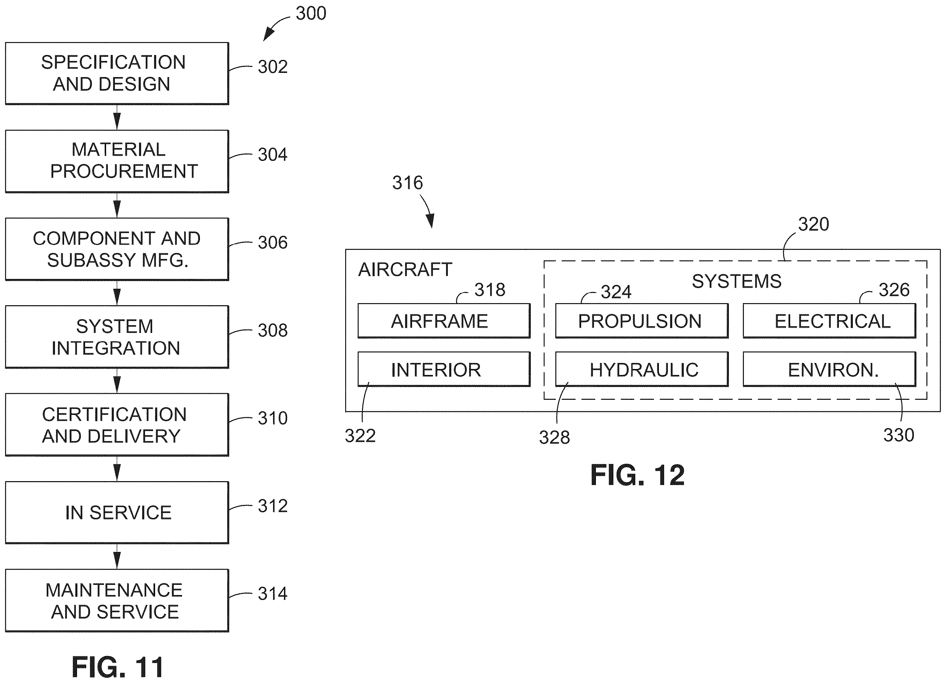

Now referring to FIGS. 11 and 12, FIG. 11 is an illustration of a flow diagram of an exemplary aircraft manufacturing and service method 300, and FIG. 12 is an illustration of an exemplary block diagram of an aircraft 316. Referring to FIGS. 11 and 12, versions of the disclosure may be described in the context of the aircraft manufacturing and service method 300 as shown in FIG. 11, and the aircraft 316 as shown in FIG. 12.

During pre-production, exemplary aircraft manufacturing and service method 300 may include specification and design 302 of the aircraft 316 and material procurement 304. During manufacturing, component and subassembly manufacturing 306 and system integration 308 of the aircraft 316 takes place. Thereafter, the aircraft 316 may go through certification and delivery 310 in order to be placed in service 312. While in service 312 by a customer, the aircraft 316 may be scheduled for routine maintenance and service 314 (which may also include modification, reconfiguration, refurbishment, and other suitable services).

Each of the processes of the aircraft manufacturing and service method 300 may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 12, the aircraft 316 produced by the exemplary aircraft manufacturing and service method 300 may include an airframe 318 with a plurality of systems 320 and an interior 322. Examples of the plurality of systems 320 may include one or more of a propulsion system 324, an electrical system 326, a hydraulic system 328, and an environmental system 330. Any number of other systems may be included. Although an aerospace example is shown, the principles of the disclosure may be applied to other industries.

Methods and systems embodied herein may be employed during any one or more of the stages of the aircraft manufacturing and service method 300. For example, components or subassemblies corresponding to component and subassembly manufacturing 306 may be fabricated or manufactured in a manner similar to components or subassemblies produced while the aircraft 316 is in service 312. Also, one or more apparatus embodiments, method embodiments, or a combination thereof, may be utilized during component and subassembly manufacturing 306 and system integration 308, for example, by substantially expediting assembly of or reducing the cost of the aircraft 316. Similarly, one or more of apparatus embodiments, method embodiments, or a combination thereof, may be utilized while the aircraft 316 is in service 312, for example and without limitation, to maintenance and service 314.

Disclosed versions of the leading edge protection system 10 (see FIG. 1), the leading edge protection method 150 (see FIG. 2A), and the leading edge protection method 160 (see FIG. 2B) provide an improved leading edge protection system 10 (see FIG. 1), and leading edge protection method 150 (see FIG. 2A), and leading edge protection method 160 (see FIG. 2B), for composite structures 14 (see FIG. 1) of air vehicles 16 (see FIGS. 1, 10), such as aircraft 16a (see FIGS. 1, 10), and leading edges 12 (see FIGS. 1, 8A, 9A) of panels 36 (see FIG. 1), such as composite panels 36a (see FIG. 1), for example, CFRP panels 36b in the form of composite fuselage panels 36c (see FIG. 1), composite wing panels 36d (see FIG. 1), and composite tail section panels 36e (see FIG. 1), or other CFRP panels 36b for air vehicles 16. The improved leading edge protection system 10 (see FIG. 1), and leading edge protection method 150 (see FIG. 2A), and leading edge protection method 160 (see FIG. 2B), protect against erosion conditions 44 (see FIG. 1), such as external airstreams 46 (see FIGS. 1, 3A-3B) and particulates 48 (see FIG. 1) that may cause wear or delamination, of the leading edges 12. Thus, the leading edge protection system 10 provides wear reduction 54 (see FIG. 1) and delamination reduction 56 (see FIG. 1) of the leading edge 12, such as the CFRP leading edge 12a (see FIG. 1), for example, the exposed leading edge 12b (see FIG. 1). The leading edge protection 50 and the erosion protection 52 for the leading edge 12, such as the CFRP leading edge 12a, for example, the exposed leading edge 12b, of the composite structure 14, is over the life of the air vehicle 16, such as the aircraft 16a. The improved leading edge protection system 10 (see FIG. 1), and leading edge protection method 150 (see FIG. 2A), and leading edge protection method 160 (see FIG. 2B), also provide lightning strike protection 58 (see FIG. 1) to the leading edge 12, such as the CFRP leading edge 12a, for example, the exposed leading edge 12b, of the composite structures 14, such as the CFRP panels 36b in the form of the composite fuselage panels 36c (see FIG. 1), the composite wing panels 36d (see FIG. 1), and the composite tail section panels 36e (see FIG. 1), or other CFRP panels 36b for air vehicles 16.

In addition, disclosed versions of the leading edge protection system 10 (see FIG. 1), the leading edge protection method 150 (see FIG. 2A), and the leading edge protection method 160 (see FIG. 2B) provide an improved leading edge protection system 10 (see FIG. 1), and leading edge protection method 150 (see FIG. 2A), and leading edge protection method 160 (see FIG. 2B), with automated processes, that are fast, that are inexpensive, that avoid the use of manually applied strips of titanium foil, and that provide advantages over known systems and methods. The automated leading edge protection system 10a (see FIG. 8A) eliminates the increased costs of manual processes and is faster and more efficient than purely manual systems.

Moreover, disclosed versions of the leading edge protection system 10 (see FIG. 1), the leading edge protection method 150 (see FIG. 2A), and the leading edge protection method 160 (see FIG. 2B) provide a combination of a robotic automated brush plating system 60a (see FIG. 5) and a robotic automated brush plating process 61a (see FIG. 5), along with a robotic automated cold spray system 100a (see FIG. 8A) and a robotic automated cold spray process 101a (see FIG. 8A). With the robotic automated cold spray system 100a (see FIG. 8A) and the robotic automated cold spray process 101a, in one version, with the 2-layer protected leading edge 12d (see FIG. 2A), a first portion 102a (see FIG. 1) of the conductive metallic sprayable powder 102 forms a mechanical bond 124 (see FIG. 1) with a portion 40a of the exposed carbon filaments 40 (see FIGS. 1, 5) exposed through the wear-resistant metallic coating 86 over the leading edge surface 38 of the leading edge 12. The first portion 102a of the exposed carbon filaments 40 expose through the wear-resistant metallic coating 86, such that the conductive metallic sprayable powder 102 forms the mechanical bond 124 with the exposed carbon filaments 40. The automated brush plating system 60 creates the wear-resistant metallic coating 86 (see FIG. 2A), which is a thin protective barrier layer for the conductive metallic sprayable powder 102 initially sprayed from the cold spray gun 104, so some of the conductive metallic sprayable powder 102 particles pierce through the thin protective barrier layer of the wear-resistant metallic coating 86 and bond to the exposed carbon filaments 40 and possibly some epoxy if present, while other conductive metallic sprayable powder 102 particles build up on the wear-resistant metallic coating 86. A second portion 102b (see FIG. 1) of the conductive metallic sprayable powder 102 preferably forms a layer-by-layer buildup 126 (see FIGS. 1, 7) over the wear-resistant metallic coating 86. The wear-resistant metallic coating 86 protects the leading edge surface 38 of the leading edge 12 from the initial impact of the conductive metallic sprayable powder 102.

In addition, disclosed versions of the leading edge protection system 10 (see FIG. 1), the leading edge protection method 150 (see FIG. 2A), and the leading edge protection method 160 (see FIG. 2B) may provide for additional optional layers, such as a conductive paint layer 88a (see FIG. 2B), or a conductive primer layer 90a (see FIG. 7), initially applied to the leading edge surface 38 of the leading edge 12 before application of the wear-resistant metallic plating solution 62 (see FIG. 1) and application or spraying of the conductive metallic sprayable powder 102 (see FIG. 1). Disclosed versions of the leading edge protection system 10 (see FIG. 1), the leading edge protection method 150 (see FIG. 2A), and the leading edge protection method 160 (see FIG. 2B) may provide for an abrading process 128 (see FIG. 1) to initially abrade the leading edge surface 38 of the leading edge 12, and/or may provide for applying a surface cleaning agent 94 to the leading edge surface 38 of the leading edge 12 and/or to the wear-resistant metallic coating 86 prior to application or spraying of the conductive metallic sprayable powder 102.

Many modifications and other versions of the disclosure will come to mind to one skilled in the art to which this disclosure pertains having the benefit of the teachings presented in the foregoing descriptions and the associated drawings. The versions described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

The description includes the following clauses:
1. A leading edge protection system for a leading edge of a composite structure of an air vehicle, the leading edge protection system comprising:
   an automated brush plating system comprising:
      a wear-resistant metallic plating solution;
      a metal electrode plating brush wetted with the wear-resistant metallic plating solution that functions as an anode; and
      a direct current power supply having a positive terminal attached to the metal electrode plating brush wetted with the wear-resistant metallic plating solution, and having a negative terminal attached to a leading edge surface of the leading edge of the composite structure that functions as a cathode, the leading edge surface having exposed carbon filaments that are conductive, wherein the wear-resistant metallic plating solution is applied to the leading edge surface to obtain a wear-resistant metallic coating on the leading edge surface; and
   an automated cold spray system comprising:
      a conductive metallic sprayable powder;
      a cold spray gun having a chamber for holding the conductive metallic sprayable powder, and having a supersonic spray nozzle for spraying the conductive metallic sprayable powder;
      an electrically heated process gas, to accelerate the conductive metallic sprayable powder through the supersonic spray nozzle above a predetermined velocity for powder adhesion; and
      an electrical power supply attached to the cold spray gun, wherein the conductive metallic sprayable powder is sprayed with the cold spray gun directly over the wear-resistant metallic coating, to obtain a conductive metallic coating over the wear-resistant metallic coating and over the leading edge surface,
      wherein the wear-resistant metallic coating and the conductive metallic coating create a protected leading edge of the composite structure of the air vehicle, the protected leading edge providing erosion protection from one or more erosion conditions.
2. The leading edge protection system of clause 1, further comprising one of, a conductive paint or a conductive primer, applied to the leading edge surface of the composite structure before application of the wear-resistant metallic plating solution with the automated brush plating system, to obtain a treated leading edge surface.
3. The leading edge protection system of clause 2, further comprising a surface cleaning agent for cleaning one or more of:
   the leading edge surface of the composite structure before application of one of, the conductive paint or the conductive primer;
   the leading edge surface of the composite structure before application of the wear-resistant metallic plating solution; and
   the wear-resistant metallic coating on the leading edge surface before spraying of the conductive metallic sprayable powder.
4. The leading edge protection system of any of clauses 1 to 3, wherein the composite structure comprises a carbon fiber reinforced polymer panel for one of, a wing skin, a fuselage barrel, or a tail section, of the air vehicle.
5. The leading edge protection system of clause 4, wherein the carbon fiber reinforced polymer panel has a carbon fiber reinforced polymer leading edge that is machined and abraded before application of the wear-resistant metallic plating solution.
6. The leading edge protection system of any of clauses 1 to 5, wherein the wear-resistant metallic plating solution of the automated brush plating system comprises one or more metal materials comprising one or more of, nickel, nickel alloy, copper, copper alloy, steel, steel alloy, silver, gold, platinum, tin, brass, bronze, rhodium, cadmium, palladium, zinc, chromium, molybdenum, zirconium, tantalum, niobium, and titanium-cadmium.
7. The leading edge protection system of any of clauses 1 to 6, wherein the conductive metallic sprayable powder of the automated cold spray system comprises one or more metal materials comprising one or more of, titanium, titanium alloy, nickel, nickel alloy, aluminum, aluminum alloy, copper, copper alloy, steel, steel alloy, silver, gold, platinum, tin, zinc, chromium, molybdenum, zirconium, tantalum, and niobium.
8. The leading edge protection system of any of clauses 1 to 7, wherein the metal electrode plating brush of the automated brush plating system, and the cold spray gun of the automated cold spray system, are end effectors each coupled to a robot arm.
9. The leading edge protection system of any of clauses 1 to 8, wherein a first portion of the conductive metallic sprayable powder forms a mechanical bond with a portion of the exposed carbon filaments exposed through the wear-resistant metallic coating over the leading edge surface, and a second portion of the conductive metallic sprayable powder forms a layer-by-layer buildup over the wear-resistant metallic coating.
10. A leading edge protection method for protecting a leading edge of a composite structure of an air vehicle, the leading edge protection method comprising:
   providing a leading edge protection system comprising:
      an automated brush plating system comprising:
         a wear-resistant metallic plating solution;
         a metal electrode plating brush wetted with the wear-resistant metallic plating solution that functions as an anode; and
         a direct current power supply having a positive terminal attached to the metal electrode plating brush wetted with the wear-resistant metallic plating solution, and having a negative terminal attached to a leading edge surface of the leading edge of the composite structure that functions as a cathode, the leading edge surface having exposed carbon filaments that are conductive; and
      an automated cold spray system comprising:
         a conductive metallic sprayable powder;
         a cold spray gun having a chamber for holding the conductive metallic sprayable powder, and having a supersonic spray nozzle for spraying the conductive metallic sprayable powder;
         an electrically heated process gas, to accelerate the conductive metallic sprayable powder through the supersonic spray nozzle above a predetermined velocity for powder adhesion; and
         an electrical power supply attached to the cold spray gun;
   applying, with the metal electrode plating brush of the automated brush plating system, the wear-resistant metallic plating solution to the leading edge surface of the leading edge of the composite structure, to obtain a wear-resistant metallic coating on the leading edge surface; and
   spraying, with the cold spray gun of the automated cold spray system, the conductive metallic sprayable powder directly over the wear-resistant metallic coating, to obtain a conductive metallic coating over the wear-resistant metallic coating and over the leading edge surface,
   wherein the wear-resistant metallic coating and the conductive metallic coating create a protected leading edge of the composite structure of the air vehicle, the protected leading edge providing erosion protection from one or more erosion conditions.
11. The leading edge protection method of clause 10, further comprising, before the applying the wear-resistant metallic plating solution with the automated brush plating system to the leading edge surface of the leading edge of the composite structure, abrading with an abrading process the leading edge surface of the leading edge of the composite structure that is machined.
12. The leading edge protection method of clause 10 or clause 11, further comprising, before the applying the wear-resistant metallic plating solution with the automated brush plating system to the leading edge surface of the leading edge of the composite structure, applying one of, a conductive paint, or a conductive primer, to the leading edge surface of the leading edge of the composite structure, to obtain a treated leading edge surface.
13. The leading edge protection method of clause 12, further comprising, applying a surface cleaning agent to clean one or more of:
   the leading edge surface of the composite structure before the applying of the conductive paint or the conductive primer;
   the leading edge surface of the composite structure before the applying of the wear-resistant metallic plating solution; and
   the wear-resistant metallic coating on the leading edge surface before the spraying of the conductive metallic sprayable powder.
14. The leading edge protection method of any of clauses 10 to 13, wherein the applying, with the metal electrode plating brush of the automated brush plating system, the wear-resistant metallic plating solution to the leading edge surface of the composite structure further comprises, applying the wear-resistant metallic plating solution comprising one or more metal materials comprising one or more of, nickel, nickel alloy, copper, copper alloy, steel, steel alloy, silver, gold, platinum, tin, brass, bronze, rhodium, cadmium, palladium, zinc, chromium, molybdenum, zirconium, tantalum, niobium, and titanium-cadmium.
15. The leading edge protection method of any of clauses 10 to 14, wherein the spraying, with the cold spray gun of the automated cold spray system, the conductive metallic sprayable powder, further comprises spraying the conductive metallic sprayable powder comprising one or more metal materials comprising one or more of, titanium, titanium alloy, nickel, nickel alloy, aluminum, aluminum alloy, copper, copper alloy, steel, steel alloy, silver, gold, platinum, tin, zinc, chromium, molybdenum, zirconium, tantalum, and niobium.
16. The leading edge protection method of any of clauses 10 to 15, wherein providing the leading edge protection system further comprises, providing the leading edge protection system where the metal electrode plating brush of the automated brush plating system, and the cold spray gun of the automated cold spray system, are end effectors each coupled to a robot arm.
17. A leading edge protection method for protecting a leading edge of a carbon fiber reinforced polymer panel of an aircraft, the leading edge protection method comprising:
   providing a leading edge protection system comprising:
      one of, a conductive paint, or a conductive primer;
      a surface cleaning agent;
      an automated brush plating system comprising:
         a wear-resistant metallic plating solution;
         a metal electrode plating brush wetted with the wear-resistant metallic plating solution; and
         a direct current power supply having a positive terminal and a negative terminal; and
      an automated cold spray system comprising:
         a conductive metallic sprayable powder;
         a cold spray gun having a chamber for holding the conductive metallic sprayable powder, and having a supersonic spray nozzle for spraying the conductive metallic sprayable powder;
         an electrically heated process gas, to accelerate the conductive metallic sprayable powder through the supersonic spray nozzle above a predetermined velocity for powder adhesion; and
         an electrical power supply attached to the cold spray gun;
   abrading a leading edge surface of the leading edge of the carbon fiber reinforced polymer panel that is machined, the leading edge surface having exposed carbon filaments that are conductive;
   cleaning, with the surface cleaning agent, the leading edge surface;
   applying one of, the conductive paint, or the conductive primer, to the leading edge surface, to obtain a treated leading edge surface;
   attaching the positive terminal of the direct current power supply to the metal electrode plating brush wetted with the wear-resistant metallic plating solution that functions as an anode;
   attaching the negative terminal of the direct current power supply to the treated leading edge surface of the carbon fiber reinforced polymer panel that functions as a cathode;
   applying, with the metal electrode plating brush of the automated brush plating system, the wear-resistant metallic plating solution to the treated leading edge surface of the carbon fiber reinforced polymer panel, to obtain a wear-resistant metallic coating on the treated leading edge surface;
   cleaning, with the surface cleaning agent, the wear-resistant metallic coating on the treated leading edge surface; and
   spraying, with the cold spray gun of the automated cold spray system, the conductive metallic sprayable powder directly over the wear-resistant metallic coating, to obtain a conductive metallic coating over the wear-resistant metallic coating and over the treated leading edge surface,
   wherein the wear-resistant metallic coating and the conductive metallic coating create a protected leading edge of the carbon fiber reinforced polymer panel of the aircraft, the protected leading edge providing erosion protection from one or more erosion conditions.
18. The leading edge protection method of clause 17, wherein the providing the leading edge protection system further comprises, providing the leading edge protection system where:
   the wear-resistant metallic plating solution comprises one or more metal materials comprising one or more of, nickel, and nickel alloy; and
   the conductive metallic sprayable powder comprises one or more metal materials comprising one or more of, titanium, and titanium alloy.
19. The leading edge protection method of clause 17 or clause 18, wherein the providing the leading edge protection system further comprises, providing the leading edge protection system where:
   the metal electrode plating brush of the automated brush plating system, and the cold spray gun of the automated cold spray system, are end effectors each coupled to a robot arm.
20. The leading edge protection method of any of clauses 17 to 19, wherein the abrading the leading edge surface of the leading edge of the carbon fiber reinforced polymer panel further comprises, abrading with an abrading process comprising one or more of, sanding with sandpaper, sanding with a grit pad, sanding with a sander, grit-blasting, soda blasting, laser ablation, cured peel ply, and plasma treatment.

## Claims

1. A leading edge protection system (10) for a leading edge (12) of a composite structure (14) of an air vehicle (16), the leading edge protection system (10) comprising:
an automated brush plating system (60) comprising:
a wear-resistant metallic plating solution (62);
a metal electrode plating brush (66) wetted with the wear-resistant metallic plating solution (62) that functions as an anode (68); and
a direct current power supply (78) having a positive terminal (80) attached to the metal electrode plating brush (66) wetted with the wear-resistant metallic plating solution (62), and having a negative terminal (82) attached to a leading edge surface (38) of the leading edge (12) of the composite structure (14) that functions as a cathode (84), the leading edge surface (38) having exposed carbon filaments (40) that are conductive, wherein the wear-resistant metallic plating solution (62) is applied to the leading edge surface (38) to obtain a wear-resistant metallic coating (86) on the leading edge surface (38); and
an automated cold spray system (100) comprising:
a conductive metallic sprayable powder (102);
a cold spray gun (104) having a chamber (106) for holding the conductive metallic sprayable powder (102), and having a supersonic spray nozzle (108) for spraying the conductive metallic sprayable powder (102);
an electrically heated process gas (110), to accelerate the conductive metallic sprayable powder (102) through the supersonic spray nozzle (108) above a predetermined velocity (112) for powder adhesion (114); and
an electrical power supply (120) attached to the cold spray gun (104), wherein the conductive metallic sprayable powder (102) is sprayed with the cold spray gun (104) directly over the wear-resistant metallic coating (86), to obtain a conductive metallic coating (122) over the wear-resistant metallic coating (86) and over the leading edge surface (38),
wherein the wear-resistant metallic coating (86) and the conductive metallic coating (122) create a protected leading edge (12c) of the composite structure (14) of the air vehicle (16), the protected leading edge (12c) providing erosion protection (52) from one or more erosion conditions (44).

2. The leading edge protection system (10) of claim 1, further comprising one of, a conductive paint (88) or a conductive primer (90), applied to the leading edge surface (38) of the composite structure (14) before application of the wear-resistant metallic plating solution (62) with the automated brush plating system (60), to obtain a treated leading edge surface (38a).

3. The leading edge protection system (10) of claim 2, further comprising a surface cleaning agent (94) for cleaning one or more of:
the leading edge surface (38) of the composite structure (14) before application of one of, the conductive paint (88) or the conductive primer (90);
the leading edge surface (38) of the composite structure (14) before application of the wear-resistant metallic plating solution (62); and
the wear-resistant metallic coating (86) on the leading edge surface (38) before spraying of the conductive metallic sprayable powder (102).

4. The leading edge protection system (10) of any of claims 1 to 3, wherein the composite structure (14) comprises a carbon fiber reinforced polymer panel (36b) for one of, a wing skin (24), a fuselage barrel (20), or a tail section (28), of the air vehicle (16).

5. The leading edge protection system (10) of claim 4, wherein the carbon fiber reinforced polymer panel (36b) has a carbon fiber reinforced polymer leading edge (12a) that is machined and abraded before application of the wear-resistant metallic plating solution (62).

6. The leading edge protection system (10) of any of claims 1 to 5, wherein the wear-resistant metallic plating solution (62) of the automated brush plating system (60) comprises one or more metal materials (64) comprising one or more of, nickel (64a), nickel alloy (64b), copper (64c), copper alloy (64d), steel (64e), steel alloy (64f), silver (64g), gold (64h), platinum (64i), tin (64j), brass (64k), bronze (641), rhodium (64m), cadmium (64n), palladium (64o), zinc (64p), chromium (64q), molybdenum (64r), zirconium (64s), tantalum (64t), niobium (64u), and titanium-cadmium (64v).

7. The leading edge protection system (10) of any of claims 1 to 6, wherein the conductive metallic sprayable powder (102) of the automated cold spray system (100) comprises one or more metal materials (64) comprising one or more of, titanium (64w), titanium alloy (64x), nickel (64a), nickel alloy (64b), aluminum (64y), aluminum alloy (64z), copper (64c), copper alloy (64d), steel (64e), steel alloy (64f), silver (64g), gold (64h), platinum (64i), tin (64j), zinc (64p), chromium (64q), molybdenum (64r), zirconium (64s), tantalum (64t), and niobium (64u).

8. The leading edge protection system (10) of any of claims 1 to 7, wherein the metal electrode plating brush (66) of the automated brush plating system (60), and the cold spray gun (104) of the automated cold spray system (100), are end effectors (70, 70c) each coupled to a robot arm (72).

9. The leading edge protection system (10) of any of claims 1 to 8, wherein a first portion (102a) of the conductive metallic sprayable powder (102) forms a mechanical bond (124) with a portion (40a) of the exposed carbon filaments (40) exposed through the wear-resistant metallic coating (86) over the leading edge surface (38), and a second portion (102b) of the conductive metallic sprayable powder (102) forms a layer-by-layer buildup (126) over the wear-resistant metallic coating (86).

10. A leading edge protection method (150) for protecting a leading edge (12) of a composite structure (14) of an air vehicle (16), the leading edge protection method (150) comprising:
(152) providing a leading edge protection system (10) comprising:
an automated brush plating system (60) comprising:
a wear-resistant metallic plating solution (62);
a metal electrode plating brush (66) wetted with the wear-resistant metallic plating solution (62) that functions as an anode (68); and
a direct current power supply (78) having a positive terminal (80) attached to the metal electrode plating brush (66) wetted with the wear-resistant metallic plating solution (62), and having a negative terminal (82) attached to a leading edge surface (38) of the leading edge (12) of the composite structure (14) that functions as a cathode (84), the leading edge surface (38) having exposed carbon filaments (40) that are conductive; and
an automated cold spray system (100) comprising:
a conductive metallic sprayable powder (102);
a cold spray gun (104) having a chamber (106) for holding the conductive metallic sprayable powder (102), and having a supersonic spray nozzle (108) for spraying the conductive metallic sprayable powder (102);
an electrically heated process gas (110), to accelerate the conductive metallic sprayable powder (102) through the supersonic spray nozzle (108) above a predetermined velocity (112) for powder adhesion (114); and
an electrical power supply (120) attached to the cold spray gun (104);
(154) applying, with the metal electrode plating brush (66) of the automated brush plating system (60), the wear-resistant metallic plating solution (62) to the leading edge surface (38) of the leading edge (12) of the composite structure (14), to obtain a wear-resistant metallic coating (86) on the leading edge surface (38); and
(156) spraying, with the cold spray gun (104) of the automated cold spray system (100), the conductive metallic sprayable powder (102) directly over the wear-resistant metallic coating (86), to obtain a conductive metallic coating (122) over the wear-resistant metallic coating (86) and over the leading edge surface (38),
wherein the wear-resistant metallic coating (86) and the conductive metallic coating (122) create a protected leading edge (12c) of the composite structure (14) of the air vehicle (16), the protected leading edge (12c) providing erosion protection (52) from one or more erosion conditions (44).

11. The leading edge protection method (150) of claim 10, further comprising, before the applying (154) the wear-resistant metallic plating solution (62) with the automated brush plating system (60) to the leading edge surface (38) of the leading edge (12) of the composite structure (14), abrading with an abrading process (128) the leading edge surface (38) of the leading edge (12) of the composite structure (14) that is machined.

12. The leading edge protection method (150) of claim 10 or claim 11, further comprising, before the applying (154) the wear-resistant metallic plating solution (62) with the automated brush plating system (60) to the leading edge surface (38) of the leading edge (12) of the composite structure (14), applying one of, a conductive paint (88), or a conductive primer (90), to the leading edge surface (38) of the leading edge (12) of the composite structure (14), to obtain a treated leading edge surface (38a), optionally, further comprising, applying a surface cleaning agent (94) to clean one or more of:
the leading edge surface (38) of the composite structure (14) before the applying of the conductive paint (88) or the conductive primer (90);
the leading edge surface (38) of the composite structure (14) before the applying of the wear-resistant metallic plating solution (62); and
the wear-resistant metallic coating (86) on the leading edge surface (38) before the spraying of the conductive metallic sprayable powder (102).

13. The leading edge protection method (150) of claims 10 to 12, wherein the applying (154), with the metal electrode plating brush (66) of the automated brush plating system (60), the wear-resistant metallic plating solution (62) to the leading edge surface (38) of the composite structure (14) further comprises, applying the wear-resistant metallic plating solution (62) comprising one or more metal materials (64) comprising one or more of, nickel (64a), nickel alloy (64b), copper (64c), copper alloy (64d), steel (64e), steel alloy (64f), silver (64g), gold (64h), platinum (64i), tin (64j), brass (64k), bronze (641), rhodium (64m), cadmium (64n), palladium (64o), zinc (64p), chromium (64q), molybdenum (64r), zirconium (64s), tantalum (64t), niobium (64u), and titanium-cadmium (64v), and/or, wherein spraying (156), with the cold spray gun (104) of the automated cold spray system (100), the conductive metallic sprayable powder (102), further comprises spraying the conductive metallic sprayable powder (102) comprising one or more metal materials (64) comprising one or more of, titanium (64w), titanium alloy (64x), nickel (64a), nickel alloy (64b), aluminum (64y), aluminum alloy (64z), copper (64c), copper alloy (64d), steel (64e), steel alloy (64f), silver (64g), gold (64h), platinum (64i), tin (64j), zinc (64p), chromium (64q), molybdenum (64r), zirconium (64s), tantalum (64t), and niobium (64u), and/or, wherein the providing (152) the leading edge protection system (10) further comprises, providing the leading edge protection system (10) where the metal electrode plating brush (66) of the automated brush plating system (60), and the cold spray gun (104) of the automated cold spray system (100), are end effectors (70, 70c) each coupled to a robot arm (72).

14. A leading edge protection method (160) for protecting a leading edge (12) of a carbon fiber reinforced polymer panel (36b) of an aircraft (16a), the leading edge protection method (160) comprising:
(162) providing a leading edge protection system (10) comprising:
one of, a conductive paint (88), or a conductive primer (90);
a surface cleaning agent (94);
an automated brush plating system (60) comprising:
a wear-resistant metallic plating solution (62);
a metal electrode plating brush (66) wetted with the wear-resistant metallic plating solution (62); and
a direct current power supply (78) having a positive terminal (80) and a negative terminal (82); and
an automated cold spray system (100) comprising:
a conductive metallic sprayable powder (102);
a cold spray gun (104) having a chamber (106) for holding the conductive metallic sprayable powder (102), and having a supersonic spray nozzle (108) for spraying the conductive metallic sprayable powder (102);
an electrically heated process gas (110), to accelerate the conductive metallic sprayable powder (102) through the supersonic spray nozzle (108) above a predetermined velocity (112) for powder adhesion (114); and
an electrical power supply (120) attached to the cold spray gun (104);
(164) abrading a leading edge surface (38) of the leading edge (12) of the carbon fiber reinforced polymer panel (36b) that is machined, the leading edge surface (38) having exposed carbon filaments (40) that are conductive;
(166) cleaning, with the surface cleaning agent (94), the leading edge surface (38);
(168) applying one of, the conductive paint (88), or the conductive primer (90), to the leading edge surface (38), to obtain a treated leading edge surface (38a);
(170) attaching the positive terminal (80) of the direct current power supply (78) to the metal electrode plating brush (66) wetted with the wear-resistant metallic plating solution (62) that functions as an anode (68);
(172) attaching the negative terminal (82) of the direct current power supply (78) to the treated leading edge surface (38a) of the carbon fiber reinforced polymer panel (36b) that functions as a cathode (84);
(174) applying, with the metal electrode plating brush (66) of the automated brush plating system (60), the wear-resistant metallic plating solution (62) to the treated leading edge surface (38a) of the carbon fiber reinforced polymer panel (36b), to obtain a wear-resistant metallic coating (86) on the treated leading edge surface (38a);
(176) cleaning, with the surface cleaning agent (94), the wear-resistant metallic coating (86) on the treated leading edge surface (38a); and
(178) spraying, with the cold spray gun (104) of the automated cold spray system (100), the conductive metallic sprayable powder (102) directly over the wear-resistant metallic coating (86), to obtain a conductive metallic coating (122) over the wear-resistant metallic coating (86) and over the treated leading edge surface (38a),
wherein the wear-resistant metallic coating (86) and the conductive metallic coating (122) create a protected leading edge (12c) of the carbon fiber reinforced polymer panel (36b) of the aircraft (16a), the protected leading edge (12c) providing erosion protection (52) from one or more erosion conditions (44).

15. The leading edge protection method (160) of claim 14, wherein the providing (162) the leading edge protection system (10) further comprises, providing the leading edge protection system (10) where:
the wear-resistant metallic plating solution (62) comprises one or more metal materials (64) comprising one or more of, nickel (64a), and nickel alloy (64b); and
the conductive metallic sprayable powder (102) comprises one or more metal materials (64) comprising one or more of, titanium (64w), and titanium alloy (64x), and/or, wherein the providing (162) the leading edge protection system (10) further comprises, providing the leading edge protection system (10) where:
the metal electrode plating brush (66) of the automated brush plating system (60), and the cold spray gun (104) of the automated cold spray system (100), are end effectors (70, 70c) each coupled to a robot arm (72), and/or, wherein the abrading (164) the leading edge surface (38) of the leading edge (12) of the carbon fiber reinforced polymer panel (36b) further comprises, abrading with an abrading process (128) comprising one or more of, sanding (130) with sandpaper (132), sanding (130) with a grit pad (134), sanding (130) with a sander (136), grit-blasting (138), soda blasting (140), laser ablation (142), cured peel ply (144), and plasma treatment (146).
